**Europäisches Patentamt**

**European Patent Office**

**Office européen des brevets**

(11) Veröffentlichungsnummer: **0 261 297**
**B1**

(12) **EUROPÄISCHE PATENTSCHRIFT**

(45) Veröffentlichungstag der Patentschrift:
**27.12.90**

(51) Int. Cl.⁵: **B62D 65/00**

(21) Anmeldenummer: **87100612.8**

(22) Anmeldetag: **19.01.87**

(54) **Mess- und Anordnungsverfahren zum Anordnen und Befestigen von Anbauteilen an Kraftfahrzeug-Karosserien und Einrichtung zum Durchführen des Verfahrens.**

(30) Priorität: **24.09.86 DE 3632477**

(43) Veröffentlichungstag der Anmeldung:
**30.03.88 Patentblatt 88/13**

(45) Bekanntmachung des Hinweises auf die Patenterteilung:
**27.12.90 Patentblatt 90/52**

(84) Benannte Vertragsstaaten:
**AT BE CH ES FR GB GR IT LI LU NL SE**

(56) Entgegenhaltungen:
**EP-A- 0 147 530**
**EP-A- 0 147 530**
**DE-A- 3 121 579**
**DE-A- 3 620 536**
**DE-C- 3 241 282**
**DE-C- 3 342 517**
**DE-C- 3 342 570**

**CH-Z.: Technische Rundschau H. 35/85, S. 132-139**

(73) Patentinhaber: **Nothelfer GmbH, Bleicherstrasse 7, D-7980 Ravensburg(DE)**

(72) Erfinder: **Jäck, Kurt, Bändelstockweg 4, D-7980 Aulendorf(DE)**

(74) Vertreter: **Beyer, Rudi, Patentanwalt Dipl.-Ing. Rudi Beyer Am Dickelsbach 8, D-4030 Ratingen 6 (Hösel)(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Meß- und Anordnungsverfahren zum Anordnen und Befestigen von Anbauteilen an Kraftfahrzeug-Karosserien nach dem Oberbegriff des Anspruchs 1.

Des weiteren betrifft die Erfindung eine Einrichtung zum Druchführen des Verfahrens.

Die nachveröffentlichte DE-A 3 620 536, welche dem Oberbegriff des Anspruchs 1 zugrunde liegt, behandelt eine Anlage zum automatischen Einbau einer Tür oder ähnlichen Schließeinrichtung in eine entsprechende Türöffnung einer Karosserie insbesondere in einer Fahrzeugkarosserie, mit einer Stützvorrichtung zum stabilen Abstützen einer Fahrzeugkarosserie und einer Fördervorrichtung zum Heranfahren einer Tür in die Nähe der Türöffnung in der Karosserie, die sich dadurch auszeichnet, daß zwischen der Stützvorrichtung und der Fördervorrichtung eine erste bewegbare Vorrichtung zum Erfassen der Abmaße der Türöffnung und eine zweite bewegbare Vorrichtung zum Abnehmen der Tür von der Fördervorrichtung und zum Einsetzen der Tür in die Türöffnung vorgesehen ist. Beide Vorrichtungen sind unter Zwischenschaltung eines Computers betrieblich miteinander verbunden, der Signale von der Vorrichtung aufnimmt, diese verarbeitet und an die Vorrichtung weitergibt. Darüber hinaus ist ein Stellorgan vorgesehen, daß die Vorrichtung zwischen einer Ruhe- und Arbeitsstellung in der Nähe der Türöffnung un die Vorrichtung zwischen zwei Arbeitsstellungen nahe der Fördereinrichtung und der Türöffnung bewegt. Da hier die Karosserie zwischen Vermessung und Einbau nicht bewegt wird, ist ihre Verweilzeit in der Einrichtung erheblich, so daß die Leistungsfähigkeit begrenzt bleibt.

Stand der Technik

Aus der DE-C 3 342 517 ist ein Verfahren zum Befestigen einer Tür an einer Karosserie eines Kraftfahrzeugs vorbekannt, wobei die Karosserie mit Abstand zueinander durch einen Endlosförderer taktweise zur vorbestimmten Stelle herangefördert werden, wonach die mit zwei in unterschiedlichen Ebenen übereinander befestigten Scharnieren versehene Tür durch einen Industrieroboter positionsgerecht zur Scharnierlage heranbefördert und befestigt wird, wobei die Tür raumgelenkig beweglich – schwimmend – gegen die dafür vorgesehene Öffnung bewegt wird, bis ein Tastfinger mit einer dafür vorbestimmten Stelle in Berührungskontakt gelangt und gleichzeitig mit dem Ertasten der Höhe der Scharniere die Winkellage der nach außen gerichteten Seitenwand des betreffenden Scharnierteils in bezug auf die Karosserie erkannt und sowohl die Werte für die vertikale Höhenzuordnung der Scharnier als auch die Werte für die Winkellage der Scharniere jeweils an einen Rechner weitergegeben werden, wobei eine Lasche des Scharniers mit der Außenkontur einer Tür durch Schweißen einstückig verbunden wird und bei innerhalb vorgegebener Toleranzen liegenden Tastwerten der Rechner an einen oder mehrere Schweißroboter auf jeder Seite der Karosserie einen Schweißbefehl erteilt, woraufhin diese Schweißroboter jeweils mit mindestens einer oberen und mindestens einer unteren Schweißnaht die zweite Lasche jedes Scharniers einer jeden Tür an die Karosserie anschweißen.

Aus der DE-C 3 342 517 ist ferner eine Vorrichtung zum Durchführen des vcorbeschriebenen Verfahrens nsbesondere zum Befestigen von Autotüren an einer Karosserie, vorbekannt, wobei jede Tür mit zwei unterschiedlichen Ebenen übereinander befestigten Scharnieren versehen ist und das eine Scharnierteil mit der Tür und das andere Scharnierteil mit der Karosserie befestigt ist und beide Scharnierteil gelenkbeweglich gegeneinander beweglich sind, wobei im Deckenbereich ein dreiachsiger Industrieroboter angeordnet ist, einen Transportier- und Positionierrahmen steuert, insbesondere in vertikaler Ebene anhebt und absenkt und ihn um eine vertikale Achse um mindestens 180 Grad dreht, wobei der Transport- und Positionierrahmen mehrere Pufferelemente und/oder mit Unterdruck beaufschlagbare Sauger aufweist, die sich sämtlich flächig gegen die Tür anlegen, wobei der Transport und Positionierrahmen mindestens eine Klemmvorrichtung zum Haltern der aus einem Magazin des Magazinförderers herausnehmbaren Tür und wenigstens einen Tastfinger aufweist, der mit einem Teil der Karosserie in Berührungskontakt gelangt, und der Transport- und Positionierrahmen in seinem mittleren Bereich ein Raumgelenk besitzt, so daß der Transport- und Positionierrahmen die jeweils aufgenommene Tür raumgelenkig - schwimmend - haltert und sie in der Lage raumgelenkig gegen die mit der betreffenden Tür auszurüstende Öffnung der Karosserie heranfährt, wobei der Transport- und Positionierrahmen mit Abstand in vertikaler Ebene - übereinander - wenigstens zweimotorig, z. B. durch Druckluft, bewegliche Andrückstücke aufweist, die jeweils eine Lasche von mit Abstand zueinander angeordneten, an der Innenseite der betreffenden Tür einstückig, z. B. angeschweißte Scharniere gegen die Fläche der Karosserie, z. B. einen Holm, andrücken, wobei im Abstand neben dem Magazinförderer ein motorig, z. B. pneumatisch, ein- und ausfahrbarer Meßkopf zum Ertasten des Höhenbereichs der betreffenden Scharnierlaschen und Winkelneigung in Bezug auf den Karosserieteil, an dem die Lasche angeschweißt werden soll, in einer senkrecht dazu stehenden Ebene angeordnet ist, und wobei der Vorrichtung ein Rechner zugeordnet ist, der diesen zwei aufeinander senkrecht stehenden Ebenen ertasteten Werte mit vorgegebenen Grenzwerten vergleicht und daraufhin die Vorrichtungsteile, insbesondere Schweißroboter, steuert.

Die vorbekannte Vorrichtung weist außerdem einen Meßkopf mit zwei mit Abstand zueinander angeordneten, parallel zueinander verlaufenden Tastplatten auf, die an ihren freien Enden je einen Tastfinger einstückig besitzen, die in vertikaler Richtung die Höhe der anzuschweißenden Lasche des Scharniers ertasten, wobei der Meßkopf außer den zwei mit Abstand zueinander angeordneten, parallel zueinander verlaufenden Tastplatten weitere Taster mit gerundeten Tasteraußenflächen aufweist, die gegen die nach außen gerichtete Oberfläche der Lasche des Scharniers zur Anlage bringbar sind, wobei jeder Tastplatte je ein einstückiger Anschlag zugeordnet ist, die jweils jegen Meßfühler einseitig frei anliegen, wobei auch die Taster einseitig gegen Meßfühler frei anliegen und daß die Bewegungen der Meßfühler an einen Rechner weiterleitbar sind.

Der Transport- und Positionierrahmen weist ein Teil mit einem Raumgelenk auf, wobei das Teil mehrere, insbesondere drei in den Eckpunkten eines Dreiecks angeordnete Pufferelemente an der die Tür aufnehmenden Seite besitzt, die sich gegen die Außenfläche der Tür anlegen und das Teil an einem Rahmen angeordnet ist, der in drei Ebenen durch Kolben-Zylinder-Einheiten um jeweils ein begrenztes Maß verstellbar ist. Der Rahmen ist mit dem Teil um wenigstens eine horizontale in zwei entgegengesetzen Richtungen um ein begrenztes Winkelmaß neigungsverstellbar ausgebildet.

Bei der DE-A 3 342 570 handelt es sich folglich darum, daß "taktile" Teile (Teile werden berührt) gefügt und befestigt werden. Es geht also immer darum, daß die Teile, z.B. die Türen mit Meßfühlern berührt werden und dann erst in ihre Lage gebracht un die Scharniere angeschweißt werden.

Bei der Herstellung von Kraftfahrzeugtüren ist es ferner bekannt, die Scharniere von Türen manuell anzuschweißen oder anzuschrauben. Beides ist unter den heutigen Wettbewerbsverhältnissen unwirtschaftlich. Außerdem lassen sich beim manuellen Anordnen von Kraftfahrzeugtüren Einbaufehler niemals ganz ausschließen, weil die Anordnung und Befestigung dieser Teile von der Sorgfalt der damit beauftragten Person abhängig ist.

In der CH-Z.: "Technische Rundschau", Heft 35/85, S. 132–139 wird innerhalb eines Aufsatzes über Sensoren für fortschrittliche Handhabungssysteme ausführlich auf die Vermessung von Teilen mit einem Triangulations-Laser-Scanning-Verfahren eingegangen.

Eine Speicherung der individuell an jeder Einzelkarosserie ausgemessenen Daten und deren sich auf lediglich wenige neu bestimmte Koordinaten stützende Transformation auf die an einer Einbaustation veränderte Lage, sind dem gesamten vorbekannten Stand der Technik nicht zu entnehmen.

Aufgabe

Der Erfindung liegt die Aufgabe zugrunde, ein Meß- und Anordnungsverfahren so auszubilden, daß sich Anbauteile mit hoher Genauigkeit und schneller Taktfolge an einer Kfz-Karosserie anordnen und befestigen lassen, und zwar ohne jeglichen menschlichen Eingriff.

Des weiteren liegt der Erfindung die Aufgabe zugrunde, eine vorteilhafte Einrichtung zur Durchführung des erfindungsgemäßen Verfahrens zu schaffen.

Der erste Aufgabenteil wird durch die in Patentanspruch 1 wiedergebenen Merkmale gelöst.

Durch das erfindungsgemäße Meß- und Anordnungsverfahren ist es möglich, alle Anbauteile, also Türen, Heck- und Frontklappe, Seitenwände, z.B. Kotflügel, frei im Raum und voneinander unabhängig zu fügen und an der Karosserie eines Kraftfahrzeuges, beispielsweise eines Pkw, zu befestigen. Dadurch ist mit hoher Wirtschaftlichkeit eine schnelle Taktfolge ohne jeglichen menschlichen Eingriff bei stets gleichbleibendem, hohem Qualitätsstandard zu erzielen, der von Hand, beispielsweise durch Anschweißen von Scharnieren der Türen od. dg., nicht erzielbar ist. Deshalb eignet sich ein erfindungsgemäßes Verfahren insbesondere zur Großproduktion von Automobilen, vorzugsweise Pkw.

Durch das erfindungsgemäße Meß- und Anordnungsverfahren werden die Teile somit frei im Raum vermessen, die Meßwerte in einem Rechner gespeichert und anschließend eben nicht taktil, sondern berührungslos anhand der gespeicherten und gemessenen Koordinatenpunkte gefügt und befestigt.

Hierzu wird die Karosserie ohne Anbauteile zunächst durch ein geeignetes System in eine Meßstation transportiert und eingesetzt. Durch z.B. pneumatische Spannelemente wird die Karosserie gehalten. Im Bodenbereich fahren nun beispielsweise drei taktile 3D-Meßtaster vor und bestimmen die Lage der Karosserie im Raum. Danach wird der Seitenwand-Ausschnitt oder auch entsprechende Kontaktstellen anderer Anbauteile, z. B. Heck- und Frontklappen, mit Scanning-Delta-Lasersonden, vermessen.

An jeder Seite der Station können z. B. neun Scanning-Delta-Lasersonden angebracht sein. Diese Arbeiten nach dem Triangulationsverfahren. Je Sonde steht immer ein zweidimensionales Ergebnis an. Über eine Anpaß-Elektronik werden die Ergebnisse linearisiert und als Dezimale einem übergeordneten Rechner angeboten. Aufgrund der unterschiedlichen Lagen der Karosserien in der Meßstation müssen immer neue Raumpunkte errechnet werden. Der Rechner untergliedert und transferiert die Ergebnisse an die jeweilige Arbeitsgruppe, z. B. zum Einsetzen und Anordnen der Seitentüren, oder aber auch der Heck- und Frontklappen und der Seitenwand vorne (Kotflügel).

Eine Meßstation ist zunächst deshalb vorteilhaft, um eine Trendmeldung zu bekommen, wenn die Maßhaltigkeit der Karosserie innerhalb der Fertigung wegdriftet. Ein weiterer Grund ist die Taktzeit. Wenn nämlich die schwierigen Rechner-Operationen, die sehr zeitintensiv sind, in den einzelnen Arbeitsgruppen, beispielsweise wo die Seitentüren oder die Heck- und Frontklappen und die Kotflügel angeordnet und befestigt werden, gemacht würden, wäre aus Taktzeitgründen eine zweite Fertigungsstraße erforderlich, was unwirtschaftlich sein würde.

Über ein Transportsystem wird die Karosserie aus der Meßstation in die nächstfolgende Arbeitsgruppe, beispielsweise zum Anordnen und Befestigen der Seitentüren, gefördert.

Eine pneumatische Hubeinrichtung o. dgl., die die mit Aufnahmen, pneumatischen Spannern und z. B. 3 Stück 3D-Meßtastern bestückt ist, übernimmt dann die Karosserie. nach dem Spannen den Karosserie mittels der pneumatischen Spanner fahren die 3D-Meßtaster vor und ermitteln erneut die genaue Lage der Karosserie in Verbindung mit der vorherigen Lage in der Meßstation.

Eine spezielle Greifeinheit, die mit einer speziellen Sensorik ausgerüstet ist, ist an einem Handlings-Roboter montiert. Dieser Handlings-Roboter holt mit dieser speziellen Greifeinrichtung aus einem bereitstehendem Satzgehänge die Anbauteile, z. B. die Türen hinten, und bringt diese in Einbaulage.

Während dieser Zeit rechnet der Rechner die neue Lage der Karosserie und deren Raumpunkte aus. Über eine genau definierte Schnittstelle werden diese errechneten Werte der Steuerung des Handling-Roboters übermittelt. Mit den korrigierten Werten wird nun das betreffende Anbauteil, z. B. die Türen hinten in Einbaulage gebracht.

Mittels 3-Stück Scanning-Delta-Lasersonden, die in einer ganz bestimmten Anordnung seitlich der Karosserie montiert sind, wird eine Überprüfung vorgenommen, um eventuelle Unkorrektheiten des Handling-Roboters zu korrigieren. Schweißroboter, die seitlich und unten an der Karosserie angeordnet sind, sind mit einem Laser-Nachsuchsystem bestückt. Dieses Nachsuchsystem ermittelt die Lage, wie der betreffende Schweißbrenner geführt werden muß.

Nach erfolgter Schweißung fahren alle Komponenten in Ausgangsstellung zurück und die Karosserie kann in die nächste Arbeitsgruppe transportiert werden.

Der Transport von z. B. der Arbeitsgruppe I nach z. B. der Arbeitsgruppe II erfolgt durch einen elektromotorisch angetriebenen Linearförderer.

Der Arbeitsablauf in der nächsten Arbeitsgruppe, z.B. der Arbeitsgruppe 11 ist der gleiche wie in der Arbeitsgruppe 1.

Daran schließt sich beispielsweise eine Arbeitsstation an, um stichprobenmäßig die Schweißqualitäten sowie die Einbaulagen an Anbauteilen, insbesondere der Türen, visuell zu überwachen.

Außerdem sind in dieser Station beispielsweise vier Bildschirme angeordnet, die der Überprüfung der Schweißnähte der beiden Scharniere für die Heckklappen und der beiden Scharniere für die Frontklappen dienen.

Sollten an den Schweißnähten der Türen hinten bzw. der Türen vorn eine bestimmte Unregelmäßigkeit auftauchen, wird in dieser Station manuell nachgeschweißt. Solche Unregelmäßigkeiten können z.B. durch Zündaussetzer oder Roboterausfall entstehen.

Der Transport von der Arbeitsgruppe II zur nächsten Arbeitsgruppe erfolgt durch den gleichen elektromotorisch angetriebenen Linearförderer.

Anschließend kann eine pneumatische Hubeinrichtung, die mit Aufnahmen, pneumatischen Spannern und 3 Stück 3D-Meßtastern bestückt ist, die Karosserie übernehmen. Nach Spannung der Karosserie mittels der pneumatischen Spanner fahren die 3D-Meßtaster vor und ermitteln ebenfalls die genaue Lage der Karosserie in Verbindung mit der vorherigen Lage in der Meßstation.

Eine spezielle Greifereinheit, die mit einer speziellen Sensorik ausgebildet ist, ist an einem Handlings-Roboter montiert. Dieser Handlings-Roboter holt mit dieser speziellen Greifeinrichtung aus einem bereitstehenden Satzgehänge, beispielsweise die Heckklappe und bringt diese in Einbaulage. Während dieser Zeit rechnet nun der Rechner die neue Lage der Karosserie bzw. die Raumpunkte aus. Über eine genau definierte Schnittstelle werden diese errechneten Werte der Steuerung des Handlings-Roboters übermittelt. Mit den korrigierten Werten wird nun die Heckklappe in Einbaulage gebracht.

Mittels 4-Stück Scanning-Delte-Lasersonden, die pneumatisch eingeschwenkt werden, wird eine Überprüfung vorgenommen, um eventuelle Unkorrektheiten des Handling-Roboters zu korrigieren.

Zwei im Oberteil befindliche Schweißroboters, die mit der gleichen Ausrüstung und Funktion wie beim Türeinbau bestückt sind, schweißen die Scharniere der Heckklappe an die Karosserie.

Die gleiche Verfahrensweise wird beim Fügen der Seitenwand (Kotflügel) vorn links/rechts durchgeführt.

Das Befestigen der Seitenwand erfolgt z.B. über elektronisch gesteuerte Schraubeinheiten. Die Konzeption der Schraubeinrichtung ist variabel, d.h. für mindestens drei Typen programmierbar.

Nach beendigter Arbeit fahren die Komponenten in Ausgangsstellung zurück. Die Karosserie wird über den elektrisch-motorisch angetriebenen Linearförderer zu einer nächsten Arbeitsgruppe, beispielsweise der Arbeitsgruppe V, transportiert.

In der Arbeitsgruppe V erfolgt der Einbau der Frontklappe. Eine pneumatische Hubeinrichtung, die mit Aufnahmen, pneumatischen Spannern und 3 Stück 3D-Meßtastern bestückt ist, übernimmt die Karosserie. Nach Spannen der Karosserie mittels der pneumatischen Spanner fahren die 3 Stück 3D-Meßtaster vor und ermitteln ebenfalls die genaue Lage der Karosserie in Verbindung mit der vorherigen Lage in der Meßstation im Raum. Eine spezielle Greifeinrichtung, die mit einer speziellen Sensorik ausgerüstet ist, ist an einem Handlings-Roboter montiert.

Dieser Handlings-Roboter holt mit dieser speziellen Greifeinrichtung aus einem bereitstehenden Satzgehänge, beispielsweise die Heckklappe und bringt diese in Einbaulage. Während dieser Zeit rechnet und der Rechner die neue Lage der Karosserie bzw. die Raumpunkte aus. Über ein genau definierte Schnittstelle werden diese errechneten Werte der Steuerung des Handlings-Roboters übermittelt. Mit den korrigierten Werten wird nun die Heckklappe in Einbaulage gebracht.

Mittels 4-Stück Scanning-Delte-Lasersonden, die pneumatisch eingeschwenkt werden, wird eine Überprüfung vorgenommen, um eventuelle Unkorrektheiten des Handling-Roboters zu korrigieren.

Zwei im Oberteil befindliche Schweißroboter, die mit der gleichen Ausrüstung und Funktion wie beim Türeinbau bestückt sind, schweißen die Scharniere der Heckklappe an die Karosserie.

Die gleiche Verfahrensweise wird beim Fügen der Seitenwand (Kotflügel) vorn links/rechts durchgeführt.

Das Befestigen der Seitenwand erfolgt z. B. über elektronisch gesteuerte Schraubeinheiten. Die Konzeption der Schraubeinrichtung ist variabel, d. h.

für mindestens drei Typen programmierbar.

Nach beendigter Arbeit fahren die Komponenten in Ausgangsstellung zurück. Die Karosserie wird über den elektrischmotorisch angetrieben Linearförderer zu einer nächsten Arbeitsgruppe, beispielsweise der Arbeitsgruppe V, transportiert.

In der Arbeitsgruppe V erfolgt der Einbau der Frontklappe. Eine pneumatische Hubeinrichtung, die mit Aufnahmen, pneumatischen Spannern und 3 Stück 3D-Meßtastern bestückt ist, übernimmt die Karosserie. Nach Spannen der Karosserie mittels der pneumatischen Spanner fahren die 3 Stück 3D-Meßtaster vor und ermitteln die ebenfalls die genaue Lage der Karosserie in Verbindung mit der vorherigen Lage in der Meßstation im Raum. Eine spezielle Greifeinrichtung, die mit einer speziellen Sensorik ausgerüstet ist, ist an einem Handlings-Roboter montiert. Dieser Handlings-Roboter holt mit dieser speziellen Griefeinrichtung aus einem bereitstehenden Satzgehänge die Frontklappe und bringt diese in Einbaulage.

Während dieser Zeit rechnet nun der Rechner die neue Lage der Karosserie bzw. die Raumpunkte aus. Über eine definierte Schnittstelle werden diese errechneten Werte der Steuerung des Handlings-Roboters übermittelt. Mit den korrigierten Werten wird nun die Frontklappe in Einbaulage gebracht.

Mittels 4 Stück Scanning-Delte-Lasersonden, die pneumatisch eingeschwenkt werden, wird eine Überprüfung vorgenommen, um eventuelle Unkorrektheiten des Handling-Roboters zu korrigieren.

Ein im Unterteil befindlicher Schweißroboter, der mit der gleichen Ausrüstung und Funktion wie beim Türeinbau bestückt ist, schweißt die Scharniere der Frontklappe an die Karosserie.

Zusätzlich sind hier vier Videokameras angeordnet, um die Schweißnähte der Heck- und Frontklappe zu kontrollieren.

Hierbei werden die Schweißnähte der Frontklappe auf einem Bildspeicher übertragen. Die Auswertung erfolgt in der Arbeitsgruppe III an den bereits beschriebenen Bildschirmen.

Die Entnahme der Karosserie aus der Arbeitsgruppe V erfolgt über ein entsprechendes Transportsystem.

In der Zeichnung ist die Erfindung - teils schematisch -an mehreren Ausführungsbeispielen veranschaulicht. Es zeigen:

Fig. 1 eine perspektivische Gesamtansicht einer Einrichtung gemäß der Erfindung;

Fig. 2 eine Draufsicht auf eine Meßstation gemäß der Erfindung;

Fig. 3 eine Seitenansicht zu Fig. 2;

Fig. 4 einen Querschnitt durch die aus den Figuren 2 und 3 ersichtlichen Meßstation;

Fig. 5 eine Draufsicht auf eine Station zum Anordnen von Seitentüren hinten, links/rechts (Station I);

Fig. 6 eine Seitenansicht zu Fig. 5;

Fig. 7 einen Querschnitt durch die aus den Figuren 5 und 6 ersichtliche Station I;

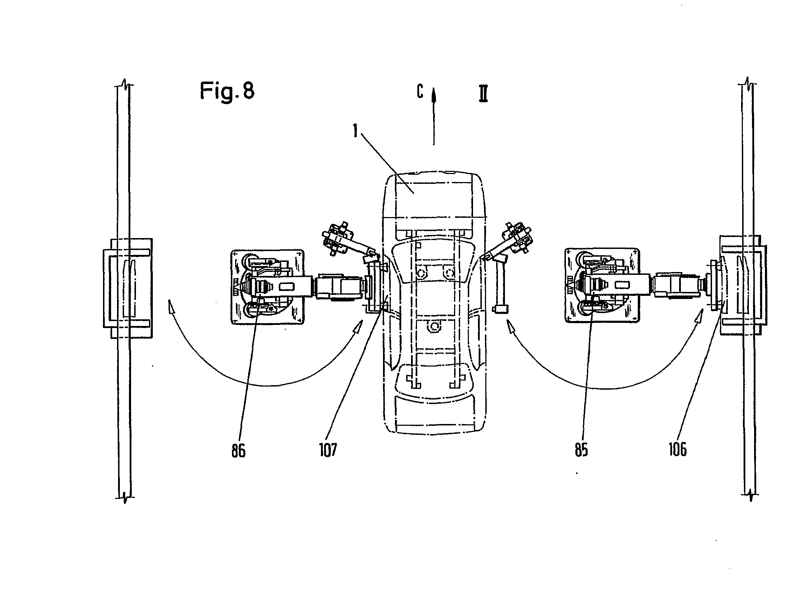

Fig. 8 eine Draufsicht auf eine Arbeitsstation zum Anordnen von Seitentüren vorn, links/rechts (Station II);

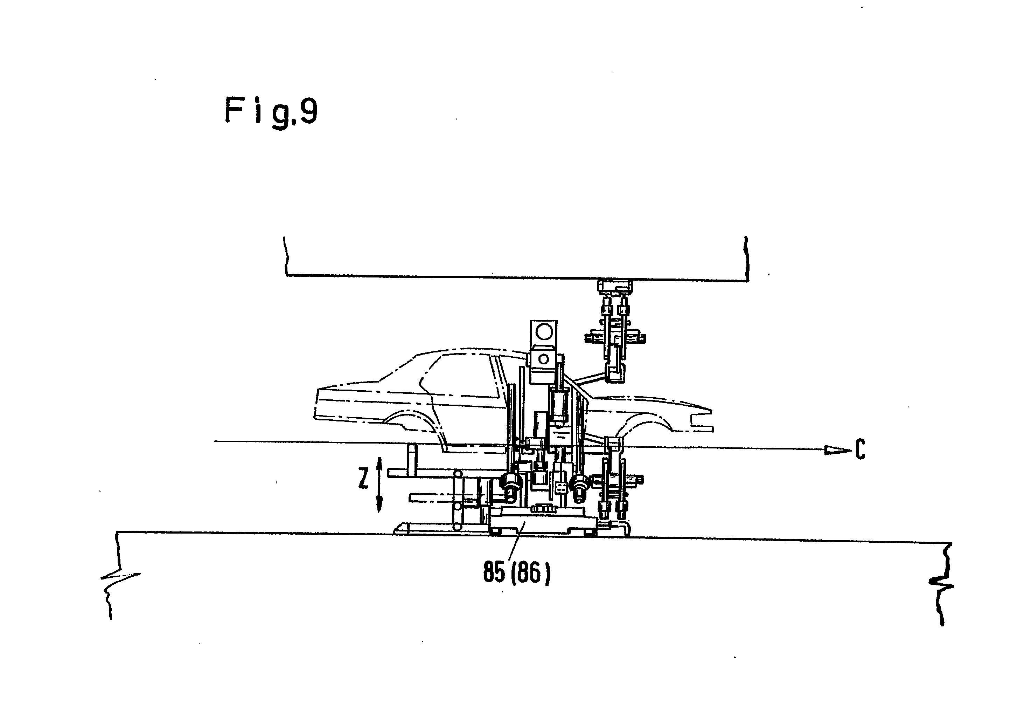

Fig. 9 eine Seitenansicht zu Fig. 8;

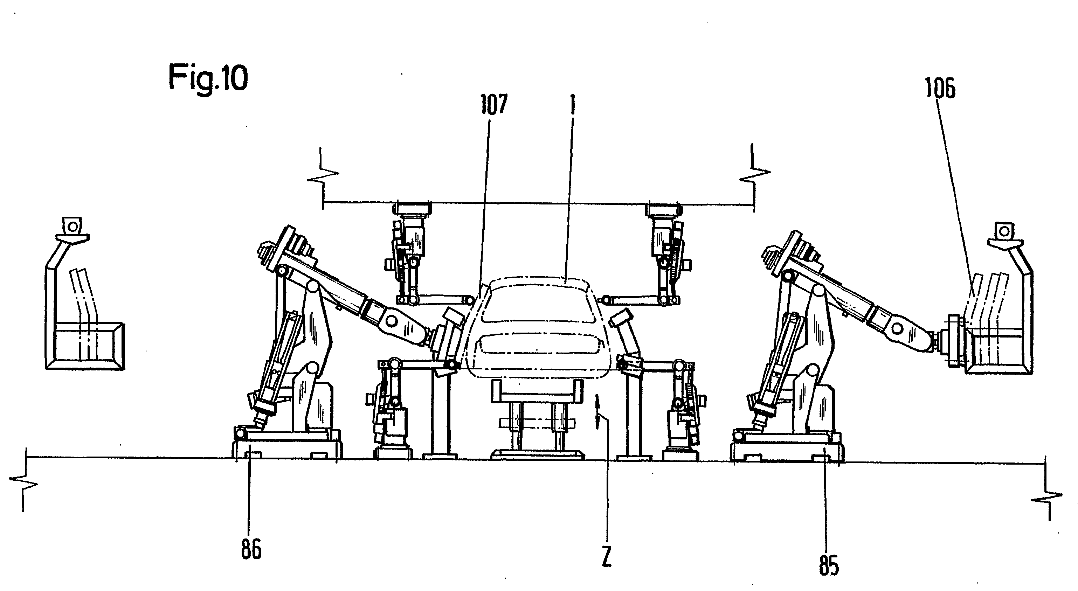

Fig. 10 einen Querschnitt durch die aus den Figuren 8 und 9 ersichtliche Station II;

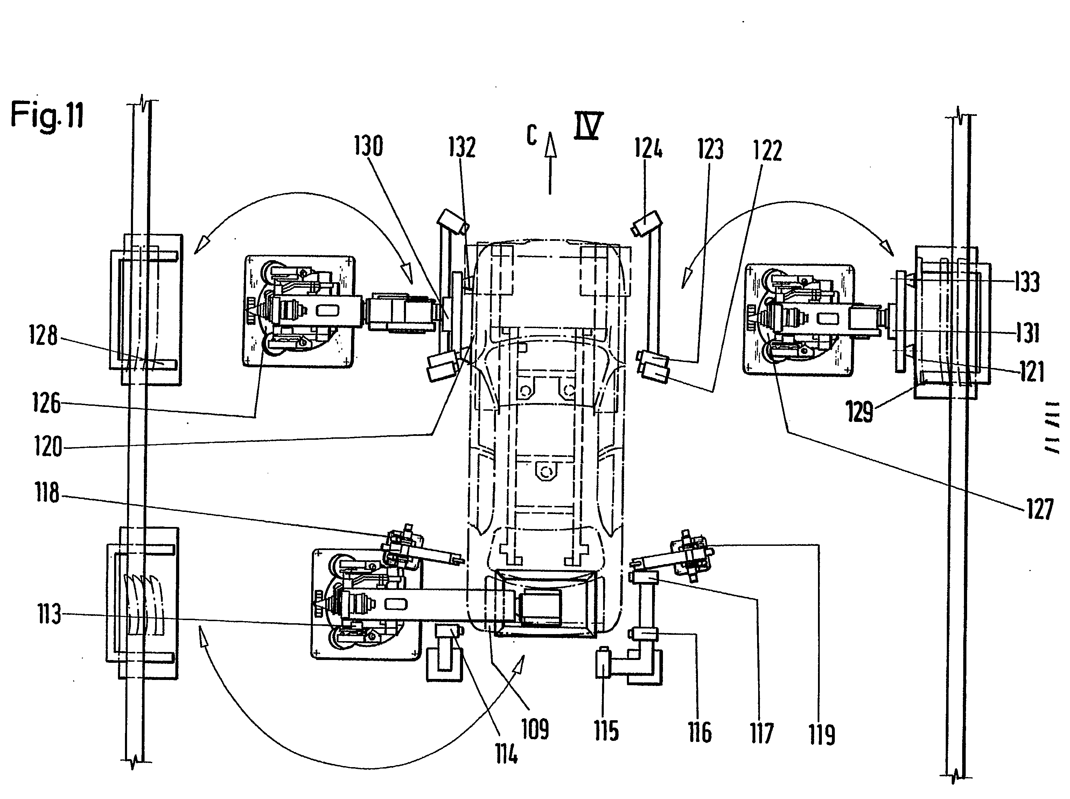

Fig. 11 eine Draufsicht auf eine Arbeitsstation zum Anordnen der Heckklappe und der Seitenwände, vorn, links/ rechts (Station IV);

Fig. 12 eine Seitenansicht zu Fig. 11;

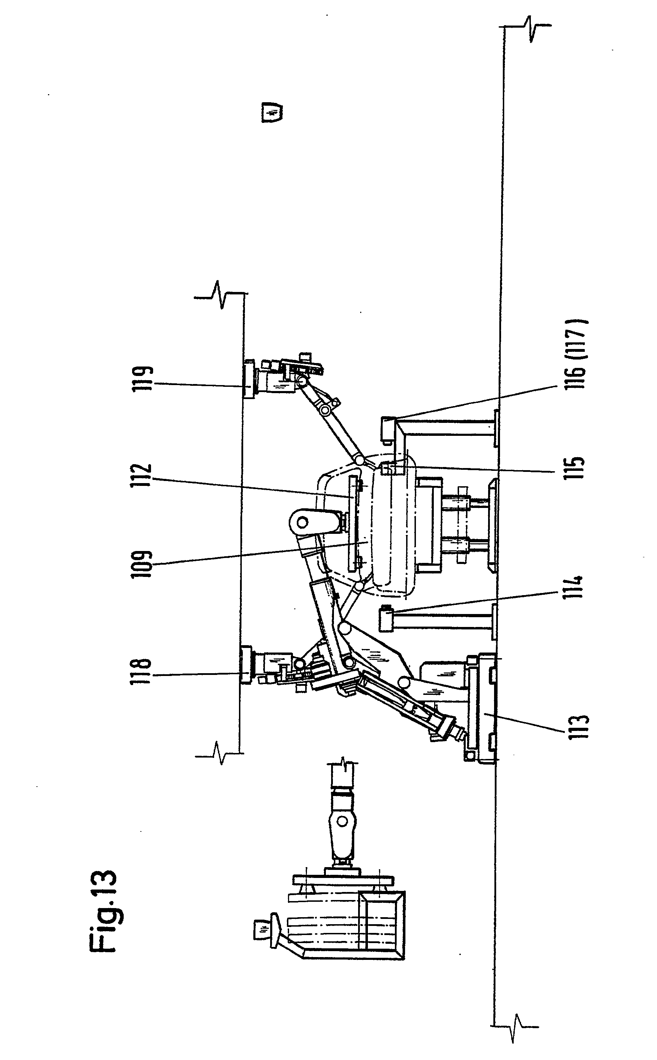

Fig. 13 einen Querschnitt durch die Station IV, Anordnen der Heckklappe;

Fig. 14 einen weiteren Querschnitt, Anordnung der Seitenwände vorn;

Fig. 15 eine Draufsicht auf eine Arbeitsstation zum Anordnen einer Frontklappe (Station V);

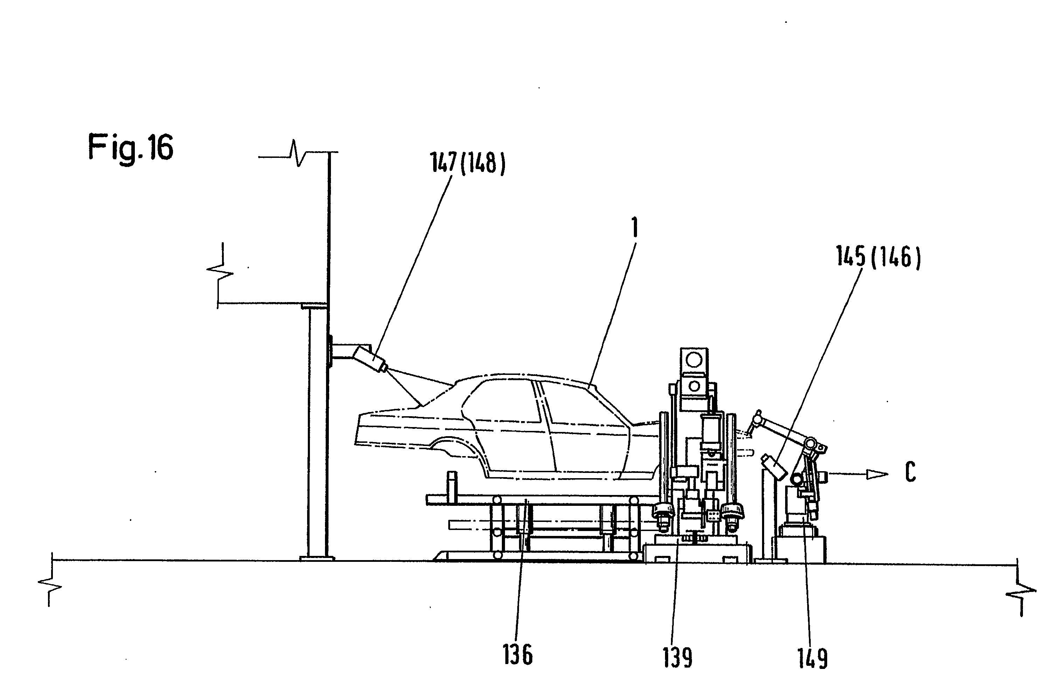

Fig. 16 eine Seitenansicht zu Fig. 15 und

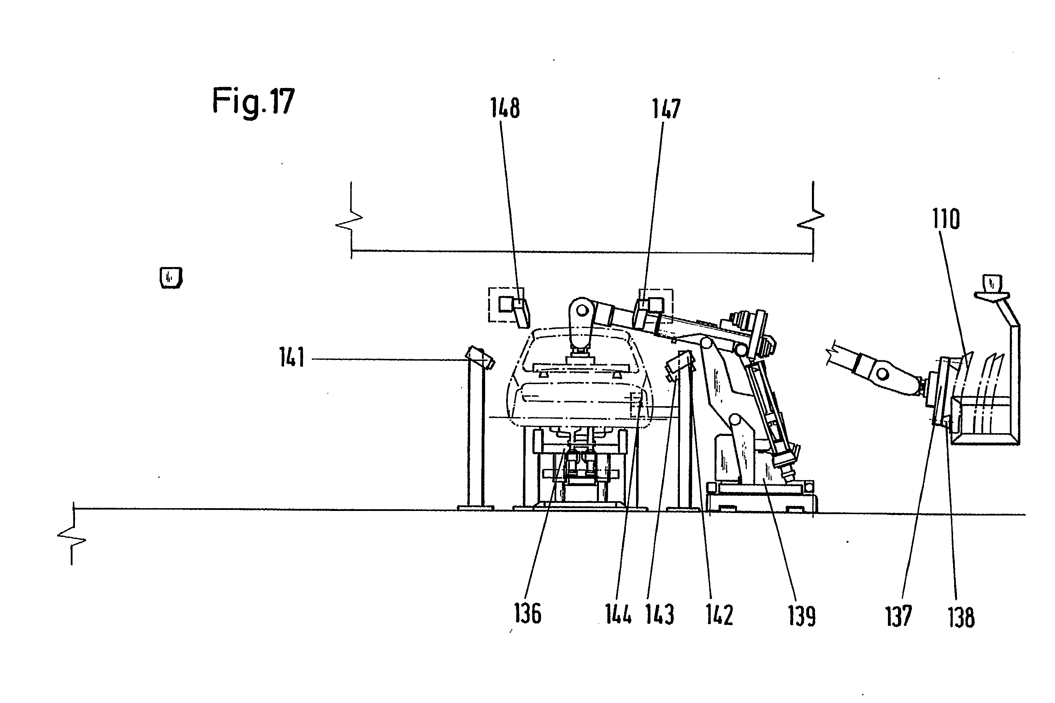

Fig. 17 einen Querschnitt durch die Station V.

In der Zeichnung ist die Erfindung in Anwendung auf eine Einrichtung dargestellt, mit der sich Karosserien für z. B. Pkw durch den Einbau von Türen sowie Heck-und Frontklappen und Seitenwänden (Kotflügel) automatisch und maschinell, also ohne jeglichen menschlichen Eingriff, mit hoher Genauigkeit und kurzen Taktzeiten und damit wirtschaftlich herstellen lassen.

Die Gesamtanlage ist so konzipiert, daß alle Anbauteile, also Heck- und Frontklappen, Türen und Seitenwände (Kotflügel) frei im Raum und voneinander unabhängig gefügt und befestigt werden können, und zwar strack- und charakterliniengenau. Die Gesamtanlage besteht aus einer extern vorgeschalteten, im einzelnen weiter unten noch beschriebenen Meßstation A, in der alle für die Anbauteile benötigten Meßpunkte bestimmt und gespeichert werden. An diese Meßstation A schließen sich die folgenden fünf Arbeitsgruppen an:

Arbeitsgruppe I: Anbau der Türen hinten links/-rechts

Arbeitsgruppe II: Anbau der Türen vorn links/-rechts

Arbeitsgruppe III: Inspektionsstation mit Bildschirm

Arbeitsgruppe IV: Anbau der Heckklappe einschließlich Seitenwand (Kotflügel) vorn links/rechts Arbeitsgruppe V: Anbau der Frontklappe

**Funktionsweise der Meßstation:**

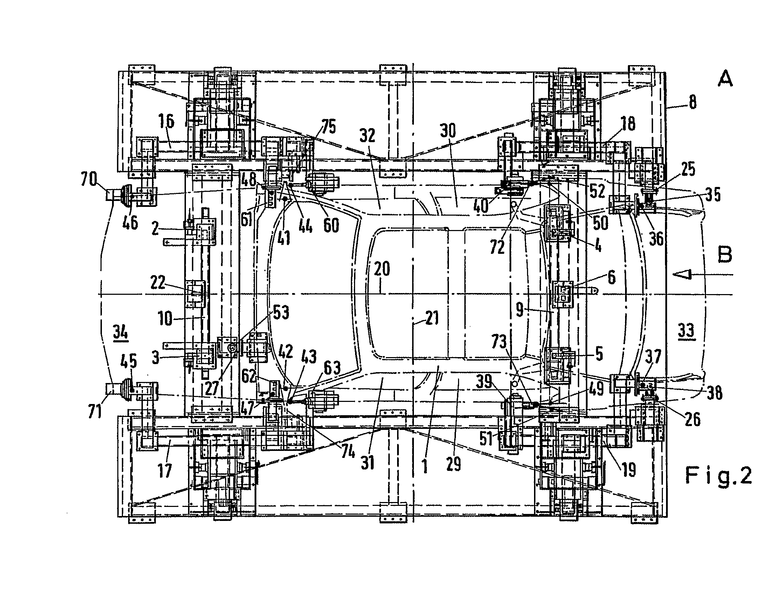

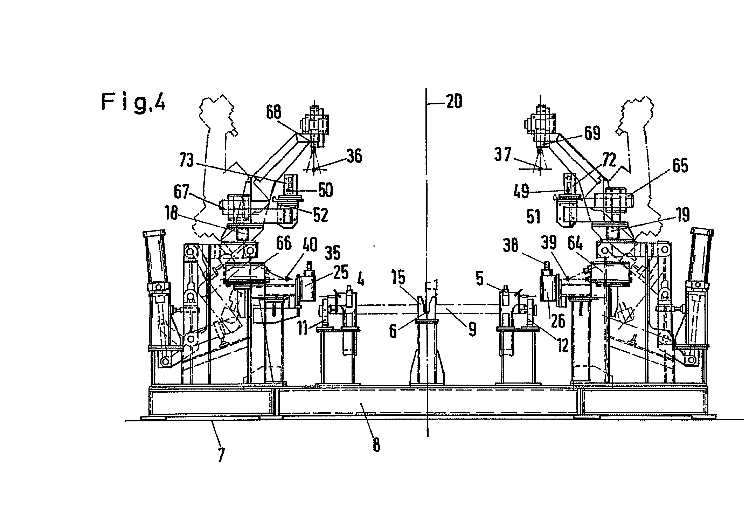

Die aus Blech bestehende Karosserie 1 wird ohne Anbauteile in die Meßstation A durch einen im einzelnen nicht dargestellten, geeigneten Förderer transportiert und abgesetzt. Pneumatische Spannelemente 2, 3 sowie 4 und 5 (Figuren 2 und 4) haltern die Karosserie 1, an der Aufnahmetraversen 9, 10 befestigt sind auf vier Auflagen oberhalb eines Grundrahmens 8, der auf einer Arbeitsbühne 7 angeordnet ist. Die mit 4 und 5 bezeichnete pneumatische Spannelemente sind über Aufnahmen 11 und 12, die Aufnahmetraverse hinten 9 in einem Einweiser 15 der Karosseriezentrierung 6 in Richtung lösbar zentriert und arretiert (Fig. 4).

Die pneumatischen Spannelemente 2 und 3 zentrieren und arretieren die Aufnahmetraverse vorn 10 in einem weiteren Einweiser der Karosseriezentrierung in Y-Richtung.

Mit dem Bezugzeichen 20 ist die Längsachse (Mitte Meßstation/Mitte Karosserie 1) und mit dem Bezugszeichen 21 die Querachse bezeichnet, die normal (rechtwinklig) zur Längsachse 20 und ebenfalls durch die Mitte der Meßstation A verläuft. Der Schnittpunkt dieser beiden Längsachsen 20 und 21 ist dicker als diese Längsachsen ausgeführt worden.

Die Durchlaufrichtung der Karosserie 1 wurde mit dem Pfeil B (Fig. 2) bezeichnet.

Bei 22 (Fig. 2) ist eine Fixierung und/oder eine Karosseriezentrierung und bei 16 bis 19 jeweils eine pneumatische Schwenkeinheit bzw. Schwenkrahmen bezeichnet, der jeweils über ein Hebelgestänge durch abwechselnd beidseitige Druckluftbeaufschlagung das Ein- und Ausschwenken nachfolgend noch beschriebener Einrichtungsteile durch Folgesteuerung und/oder Fernsteuerung ermöglicht.

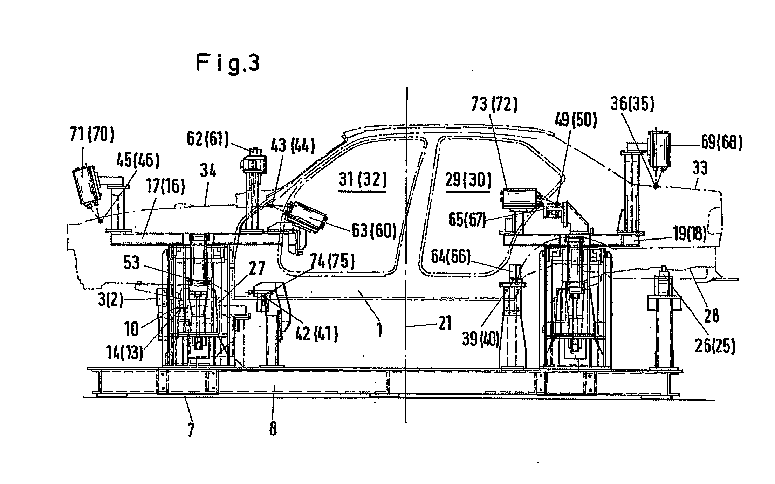

Nachdem die Karosserie 1 durch die pneumatischen Spannelemente 2 bis 5 arretiert und in den Aufnahmen für Traverse und Einweiser auch zentriert worden ist, nachdem die pneumatischen Schwenkeinheiten 16 - 19 in die mit ausgezogenen Linien dargestellten Stellungen (Fig. 3 und 4) eingeschwenkt worden ist, fahren drei taktile 3-D-Meßtaster 25, 26 und 27 gegen den Boden 28 der Karosserie 1 vor und bestimmen dadurch die Lage der Karosserie 1 im Raum. Durch die drei Meßpunkte ist eine Ebene eindeutig bestimmt. Danach werden der betreffende Seitenwand-Ausschnitt, z. B. die Seitenwandausschnitte 29, 30 für die Seitentüren hinten bzw. 31, 32 für die Seitentüren vorne bzw. der Ausschnitt 33 für die Heckklappe bzw. der Ausschnitt 34 für die Frontklappe bzw. auch entsprechende Kontaktstellen, die Meßpunkte 36, 37, 39, 40, 41, 42, 43, 44, 45, 46, 47, 48, 49, 50, 51, 52, mit Scanning-Delta-Lasersonden, 60, 61, 62, 63, 64, 65, 66, 67, 68, 69, 70 bis 75, vermessen.

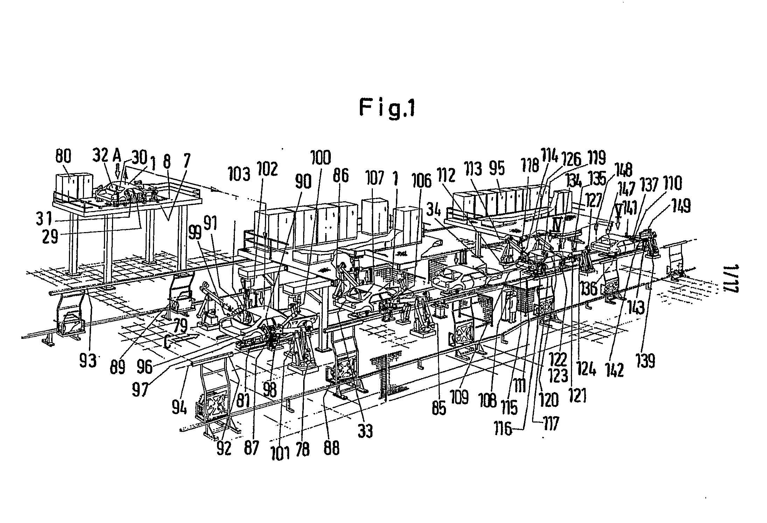

An jeder Karosserie-Seite können z. B. acht solcher Scanning-Delta-Lasersonden 60 bis 75 angeordnet sein. Diese Scanning- Delta-Lasersonden 60 bis 75 arbeiten jeweils nach dem Triangulationsverfahren. Pro Sonde steht immer ein zweidimensionales Ergebnis an. Über eine Anpaß-Elektronik werden diese Ergebnisse linearisiert und als Dezimale einem übergeordneten Rechner 80 (Fig. 1) angeboten. Aufgrund der unterschiedlichen Lagen der Karosserien 1 in der Meßstation A müssen immer neue Raumpunkte ermittelt werden. Der Rechner 80 untergliedert und transferiert die gemessenen Ergebenisse an die jeweiligen Arbeitsgruppen I bis V in der noch zu beschreibenden Art und Weise.

**Arbeitsgruppe I - Seitentüren hinten links/rechts:**

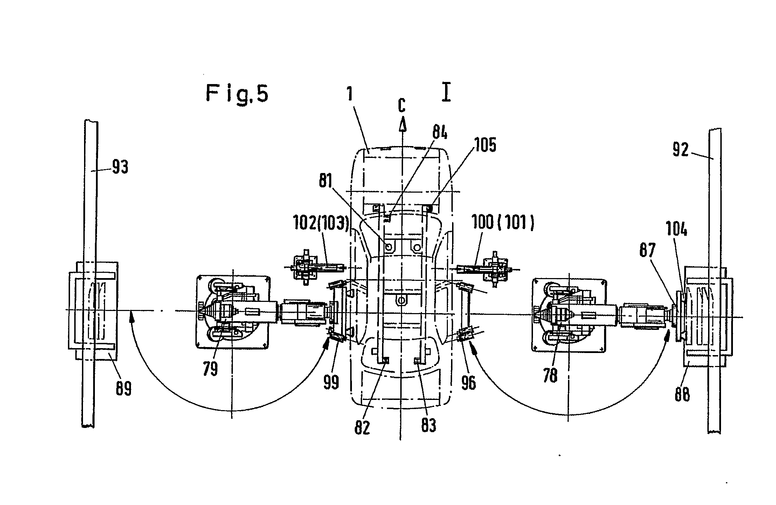

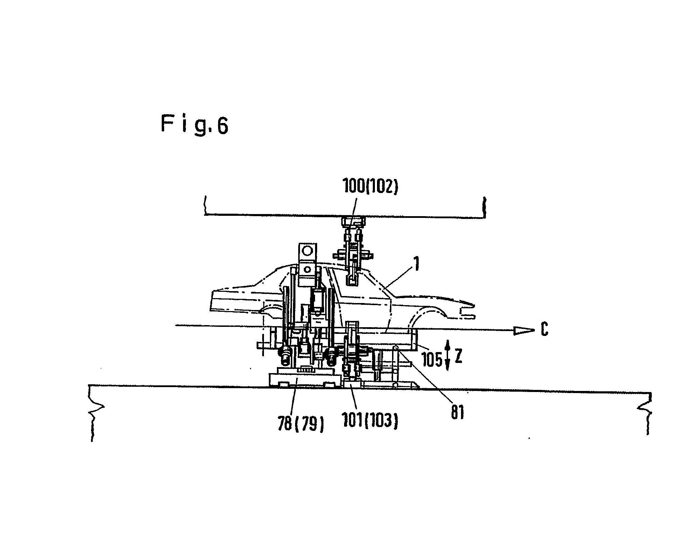

Über ein nicht dargestelltes Transportsystem wird die Karosserie 1 aus der Meßstation A in die Arbeitsgruppe I transportiert, z. B. abgesenkt. Ein pneumatisch heb-und senkbarer Hubtisch 81 (Fig. 5, 6), der in Richtung Z, also in vertikaler Ebene verstellbar ist, übernimmt mit Aufnahmen 105, z. B. mit nicht dargestellten, pneumatischen, z. B. als Kniehebelspannvorrichtungen ausgebildeten Spannern die Karosserie 1. In der Arbeitsstation I sind außerdem drei 3-D-Meßtaster 82, 83 und 84 (Fig. 5) vorgesehen, die, wie die in der Meßstation A vorhandenen Meßtaster 25, 26, 27 ausgebildet und angeordnet sein können und die ebenfalls gegen den Bodenbereich der Karosserie 1 bis zum Anschlag anfahren und die genaue Lage der Karosserie 1 im Raum in der Arbeitsstation I in Verbindung mit der vorherigen Lage in der Meßstation A ermitteln bzw. mit dieser vergleichen.

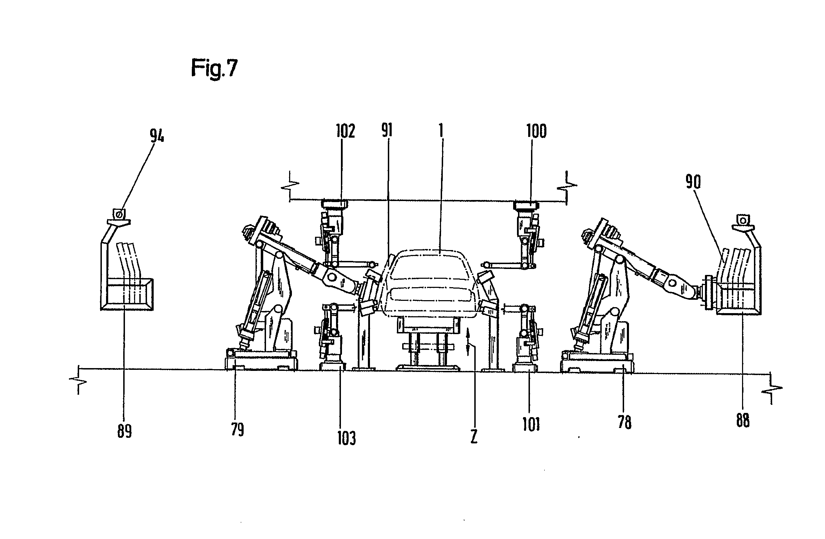

Auf jeder Seite der Karosserie I ist eine Greifeinheit 87, die mit einer speziellen Sensorik ausgerüstet ist, an einem Handlings-Roboter 78 bzw. 79, der als sechsachsiger Roboter ausgebildet ist, montiert. Diese Handlings-Roboter 78 bzw. 79 holt mit dieser speziellen Greifeinheit, von der der Greifer 87 (Fig. 1 u. 5) und ein Sauger (Fig. 5) mit einem Bezugszeichen bezeichnet worden ist, aus einem bereitstehendem Satzgehänge, z. B. 88 bzw. 89 (Fig. 1) die Türe 90 bzw. 91 und bringt diese in Einbaulage (Fig. 1). Die Satzgehänge 88 und 89 sind an parallel zur Durchlaufrichtung C (Fig. 1) außerhalb des Aufstellbereiches der Handlings-Roboter 78 bzw. 79 angeordnet und verlaufen parallel zueinander. Hierzu sind die Satzgehänge 88 und 89 in Profilschienen 92 bzw. 93 über flexible Zugmittel, z. B. 94 (Fig. 1), motorisch taktweise bewegbar und weisen taschenförmige, aus Rohren oder Profileisen bestehende Aufnahmeöffnungen zum senkrechten Anordnen der Anbauteile, beispielsweise der Seitentüren hinten 90 und 91 (Fig. 1), auf. Der Antriebsmotor des Taktförderers ist nicht dargestellt. Während der Zeit, in der der sechsachsige Handlings-Roboter 78 bzw. 79 die Tür 90 bzw. 91 aus dem zugeordneten Satzgehänge 88 bzw. 89 herausnimmt und zur Karosserie 1 transportiert, rechnet ein Rechner 95, der mit dem Rechner 80 elektrisch bzw. elektronisch verbunden ist, die neue Lage der Karosserie 1 bzw. deren im Zusammenhang mit der Meßstation A benannte Raumpunkte (Koordinaten) aus. Über eine genau definierte Schnittstelle werden diese errechneten Werte der Steuerung des betreffenden Handlings-Roboters 78 bzw. 79 übermittelt. Mit den korrigierten Raumpunktwerten wird nun die betreffende Tür 90 bzw. 91 in die jeweilige Einbaulage, z. B. die Tür 91 (Fig. 1 und 7) von dem zugeordneten Handlings-Roboter, dem Handlings-Robotern 79 gebracht.

Mittels in der Arbeitsstation I angeordneter drei Scanning-Delta-Lasersonden 96, 97 und 98, die in einer ganz bestimmten Anordnung zu der Karosserie 1 montiert sind, wird eine Überprüfung vorgenommen, um eventuelle Unkorrektheiten des zugeordneten Handlings-Roboters, z. B. des Handlings-Roboters 78, zu korrigieren. Selbstverständlich sind dem Handlings-Roboter 79 ebenfalls drei solcher Scanning-Lasersonden zugeordnet, wovon auf Fig. 1 lediglich die Lasersonde 99 schematisch ersichtlich ist. Mittels aller zuvor und nachfolgend beschriebener Lasersonden lassen sich die jeweiligen Anpaßbauteile spalt- bzw. strackgenau anordnen und automatisch/maschinell montieren, und Beachtung der jeweiligen Charakterlinie der Karosserie 1.

Seitlich sind der Karosserie 1 oben und unten jeweils zwei Schweiß-Roboter 100, 101 bzw. 102, 103 zugeordnet (Fig. 1, 5 und 7), die mit einem Laser-Nahtsuchsystem (nicht dargestellt) bestückt sind.

Dieses Nahtsuchsystem ermittelt die Lage, wie der betreffende Schweißbrenner geführt werden muß, um eine optimale Naht zu schweißen.

Nach erfolgter Schweißung fahren alle Komponenten in Ausgangsstellung zurück und die Karosserie 1 kann über einen Linearförderer in Richtung C in die Arbeitsgruppe II weitertransportiert werden. Der im einzelnen nicht dargestellte Linearförderer ist durch einen gleichfalls nicht dargestellten Elektromotor angetrieben.

Die jeweiligen Greifeinheiten 87 der sechsachsigen Handlings-Roboter 78 bzw. 79 weisen in einem Rahmen angeordnet mehrere Sauger auf, von denen in Fig. 5 lediglich der Sauger 104 dargestellt ist. Auch alle anderen Greifeinheiten können in gleicher Weise ausgebildet und angeordnet sein. Die Sauger sind mittels Unterdruck gesteuert beaufschlagbar.

## Arbeitsgruppe II Türen vorn links/rechts

Die Karosserie 1 wird aus der Arbeitsgruppe I durch den Linearförderer taktweise in die Arbeitsgruppe II gebracht. Der Arbeitsablauf in der Arbeitsgruppe II ist der gleiche wie in der Arbeitsgruppe I.

Die Türen links/rechts vorn sind mit den Bezugszeichen 106 bzw. 107, die Handlings-Roboter sind mit 85 und 86 bezeichnet worden.

## Arbeitsgruppe III Inspektions-Station mit Bildschirm evtl. Nachbearbeitungsstation

Diese Arbeitsstation III wurde eingebaut, um stichprobenmäßig die Schweißqualität sowie die Einbaulage der Türen hinten 90, 91 bzw. vorn 106, 107 visuell zu überprüfen.

Weiterhin sind in dieser Station III vier Bildschirme 108 angeordnet, die der Überprüfung der Schweißnähte der beiden nicht dargestellten Scharniere der Heckklappe 109 und der beiden nicht dargestellten Scharniere der Frontklappe 110 dienen.

Sollte an den Schweißnähten der Türen hinten 90, 91 bzw. der Türen vorn 106, 107 eine vorbestimmbare Unregelmäßigkeit auftauchen, wird in der Arbeitsgruppe III manuell nachgeschweißt.

## Arbeitsgruppe IV Anbauheckklappe einschließlich Seitenwand vorn links/rechts

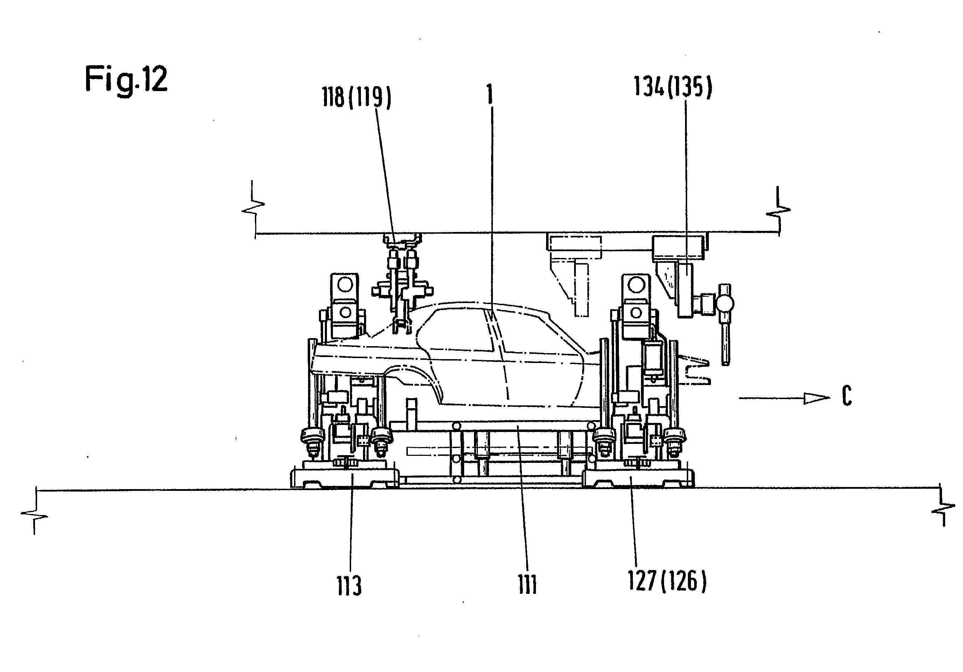

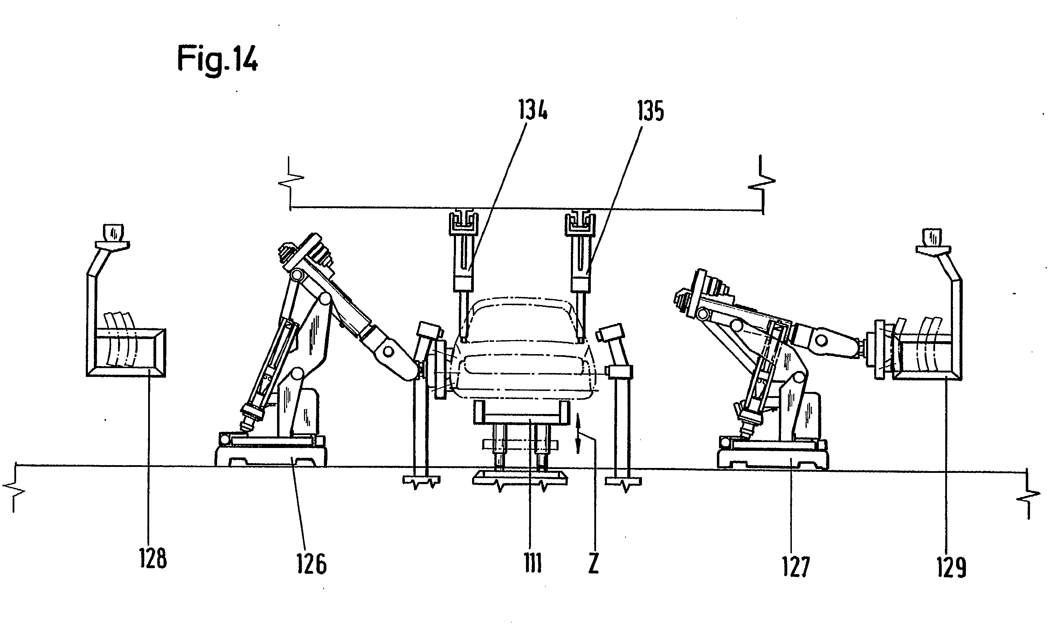

Eine pneumatische Hubeinrichtung 111 (Fig. 12 und 14), die mit nicht näher bezeichneten Aufnahmen und pneumatischen Spannern, z. B. Kniehebelgelenkspannern und mit drei 3-D-Meßtastern wie in der Arbeitsstation I bestückt sind, übernimmt die Karosserie 1. Nach dem Spannen der Karosserie 1 mittels der pneumatischen Spanner fahren wiederum die 3-D-Meßtaster gegen den Boden der Karosserie 1 vor und ermitteln die genaue Lage der Karosserie 1 im Raum in dieser Arbeitsstation IV in Verbindung mit der vorherigen, im Rechner gespeicherten Lage in der Meßstation A. Die Meßwerte werden wiederum in den Rechner 95 hineingegeben und mit den Meßwerten des Rechners 80 der Meßstation A verglichen.

Eine spezielle Greifeinheit 112, die mit einer speziellen Sensorik ähnlich der sechsachsigen Handlings-Roboter in den vorherigen Arbeitsstationen I und II ausgerüstet ist; ist wiederum an einem sechsachsigen Handlings-Roboter 113 montiert. Die Greifeinheit 112 kann mit durch Unterdruck beaufschlagbaren Saugern ausgerüstet sein. Diese Handlings-Roboter 113 holen mit der Greifeinheit 112 aus einem bereitstehenden Satzgehänge, das wie das Satzgehänge 88 ausgebildet sein kann, die Heckklappe 109 und bringt diese in Einbaulage. Zur Sicherung des Anbauteiles gegen Vakuumabfall sind zusätzlich zwei pneumatische Kniehebelspanner (Fanghaken) angeordnet. Dieses gilt für alle Anbauteile. Während dieser Zeit rechnet der Rechner 95 die neue Lage der Karosserie 1 bzw. deren Raumpunkte in der Arbeitsstation IV aus. Über eine genau definierte Schnittstelle werden diese errechneten Werte der Steuerung des Handlings-Roboters 113 übermittelt. Mit den korrigierten Werten wird nun die Heckklappe 109 durch den Handlungs-Roboter 113 in ihre Einbaulage gebracht.

Mittels vier Scanning-Delta-Lasersonden 114 bis 117, die in einer ganz bestimmten Anordnung seitlich der Karosserie 1 - montiert sind, wird eine Überprüfung vorgenommen, um eventuelle Unkorrektheiten des Handlings-Roboters 113 zu korrigieren. Dabei werden Bündigkeit und Spalt - wie bei allen anderen Abauteilen erforderlichenfalls auch - bestimmt und an den Handlings-Roboter in Form von Steuerbefehlen weitergegeben.

Zwei im Oberteil befindliche Schweißroboter 118 bzw. 119, die mit der gleichen Ausrüstung und Funktion wie beim Türeinbau bestückt sind, schweißen die nicht näher veranschaulichten Scharniere der Heckklappe 109 an die Karosserie 1 an.

Die gleiche Verfahrensweise wird beim Fügen der Seitenwand 120 bzw. 121 links/rechts durchgeführt. Hier sind auf jeder Seite drei Scanning-Delta-Lasersonden vorhanden, wovon aus Fig. 1 die der rechten Seite 122, 123 und 124 ersichtlich sind. Die Handlings- Roboter sind hier mit dem Bezugszeichen 126 bzw. 127 bezeichnet, während die Satzgehänge die Bezugszeichen 128 bzw. 129 tragen, in denen die Seitenwände 120 bzw. 121 angeordnet sind, die wiederum über eine spezielle Greifeinheit 130 bzw. 131 mittels Sauger 132 bzw. 133, die durch Unterdruck steuerbar zu beaufschlagen sind, transportiert werden.

Das Befestigen der Seitenwände 120 bzw. 121 erfolgt bei der dargestellten Ausführu ngsform mit Blechschrauben über elektronisch gesteuerte Schraubeinheiten 134 bzw. 135. Diese Schraubeinheiten sind variabel, d. h. zumindest für drei Typen frei programmierbar.

Nach beendeter Arbeit fahren die Komponenten in Ausgangsstellung zurück. Die Karosserie 1 wird daraufhin durch den elektromotorisch angetriebenen Linearförderer zur Arbeitsgruppe V weitertransportiert.

## Arbeitsgruppe V Aufbaufrontklappe

Auch hier übernimmt eine pneumatische Hubeinrichtung 136 die Karosserie 1, wobei die pneumatische Hubeinrichtung 136 mit nicht näher bezeichneten Aufnahmen, pneumatischen Spannern, z. B. Kniehebelspannvorrichtungen und drei Stück 3-D-Meßtastern wie in der Arbeitsstation I, bestückt ist. Nach dem Spannern der Karosserie 1 mittels der pneumatischen Spanner fahren wiederum die 3-D-Meßtaster gegen den Bodenbereich der Karosserie 1 vor und ermitteln die genaue Lage der Karosserie 1 in der Arbeitsstation V in Verbindung mit der vorherigen Lage in der Meßstation A.

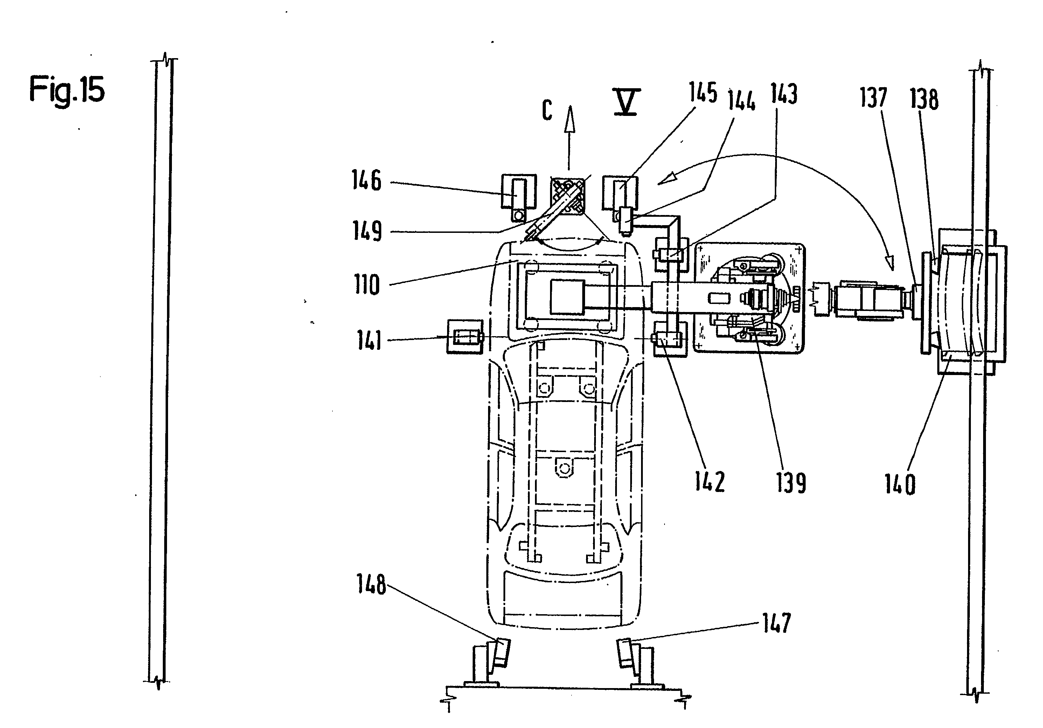

Eine Greifeinheit 137 mit durch Unterdruck zu beaufschlagenden Saugern 138, die an einem Rahmen angeordnet sind, ist an einem sechsachsigen Handlings-Roboter 139 montiert. Dieser Handlings-Roboter 139 holt mit der Greifeinheit 137 aus einem bereitstehendem Satzgehänge 140 die Frontklappe 110 und bringt diese in Einbaulage (Fig. 15). Zur Sicherung des Anbauteiles gegen Vakuumabfall sind zusätzlich zwei pneumatische Kniehebelspanner (Fanghaken) angeordnet. Dieses gilt für alle Anbauteile. Während dieser Zeit rechnet der Rechner 95 die Neulage der Karosserien unter Berücksichtigung deren in der Meßstation A umfaßten Raumpunkte aus. Über eine genau definierte Schnittstelle werden diese errechneten Werte der Steuerung des Handlings-Roboters 139 übermittelt. Mit den korrigierten Werten wird nun die Frontklappe 110 in Einbaulage gebracht.

Mittels vier Scanning-Delta-Lasersonden 141, 142, 143, 144, die pneumatisch eingeschwenkt werden, wird eine Überprüfung vorgenommen, um eventuelle Unkorrektheiten des Handlings-Roboters 139 zu korrigieren. Mit 145 bzw. 146 sind Videogeräte gezeichnet, mit denen die Schweißnähte von der Arbeitsstation 3 aus kontrolliert werden können. Die Bezugszeichen 147 und 148 bezeichnen gleichfalls Videogeräte, um die Schweißnähte der Heckklappe von der Arbeitsstation III aus zu kontrollieren.

Einen im Unterteil befindlicher Schweißroboter 149, der in Richtung des Pfeiles hin- und herschwenkbar ist und der mit der gleichen Ausrüstung und Funktion wie beim Türeinbau bestückt ist, schweißt die Scharniere der Frontklappe 110 an die Karosserie 1.

Die von den Video-Kameras 145 bis 148 erfaßten Bildwerte werden auf einen Bildspeicher übertragen. Die Auswertung erfolgt in der Arbeitsgruppe III an den bereits beschriebenen Bildschirmen.

Die Entnahme der Karosserie 1 aus der Arbeitsgruppe V erfolgt über ein entsprechendes, nicht dargestelltes Transportsystem.

## Patentansprüche

1. Meß- und Anordnungsverfahren zum Anordnen und Befestigen von Anbauteilen an Kraftfahrzeug-Karosserien (1), bei dem an der arretierten und gespannten Karosserie (1) 3-D-Meßtaster (25, 26, 27) die Lage der Seitenwandausschnitte (29, 30, 31, 32) für die hier vorgesehenen Türen (106, 107) und anderer Ausschnitte mit entsprechenden Kontaktstellen der Anbauteile, sowie die Anschraubflächen für Seitenwände mittels Laser-Sonden (60–75) ermitteln und diese Meßergebnisse an einen Rechner (80) weitergeleitet werden, wo sie mit den gespeicherten Daten durch einen Rechner (95) verglichen werden und der Rechner (95) während der Bewegungszeit eines Handlings-Roboters (126, 127) die Lage der Anschlußpunkte (35–48) der Anbauteile (33, 34) errechnet und an die Steuerung des Handlings-Roboters (78, 89) übermittelt und der betreffende Handlings-Roboter (78, 79) mit den so korrigierten Werten für die Anschlußpunkte (35–53) des betreffenden Anschlußteils (33, 34) in seine Einbaulage bringt, heranfördert und anschließend befestigt, wobei alle Anbauteile (33, 34) im freien Raum unabhängig voneinander automatisch maschinell an der Karosserie (1) spalt- und charakterliniengenau positioniert und befestigt werden, dadurch gekennzeichnet, daß die Karosserie (1) zunächst in eine besondere Meßstation (A) transportiert wird und anschließend zum Zwecke der Anordnung der Anbauteile (90, 91, 106, 107, 109, 110, 120, 121) aus der Meßstation (A) wegtransportiert wird, und mindestens einer weiteren Station (I) zugeführt wird, und daß in dieser Station die Lage der Karosserie (1) im Raum erneut bestimmt und anschließend Handlings-Roboter (78, 79) die Anbauteile, rechnergesteuert unter Berücksichtigung der in dieser Station gegebenen Lage der Karosserie in Anbaulage bringen.

2. Verfahren nach Anspruch 1, dadurch gekennzeichnet, daß während oder nach dem Rechnervorgang, bei welchem die Koordinaten (35–53) der Karosserie (1) im Raum nach der Meßstation (A) mit der zuvor in der Meßstation (A) bestimmten Koordinaten (35–53) verglichen werden, Scanning-Delta-Laserconsen u.a. (96–99; 122–124; 141–144) die Lage des betreffenden Anbauteiles (90–121), insbesondere die Spaltbreite und/oder die Anschlußpunkte abtasten, und daß diese Meßwerte ebenfalls zur Steuerung der Handlings-Roboter (78, 79, 85, 86, 113, 126, 127, 139) an diese zwecks Korrektur der Lage des betreffenden Anschlußteils (90–121) weitergegeben werden.

3. Verfahren nach Anspruch 1 oder 2, dadurch gekennzeichnet, daß ein Laser-Nahtsuchsystem die Lage, wie der Schweißroboter geführt werden soll, ermittel und daraufhin Schweißroboter (100–103, 118, 119, 149) zum Befestigen von Anschlußteilen (90, 91, 106, 107, 109, 110) oder diesen zugeordneter Befestigungsmittel (Laschen od. dgl.) an der Karosserie (1) anschweißt.

4. Verfahren nach Anspruch 2 oder 3, dadurch gekennzeichnet, daß an jeder Seite der Karosserie (1) mehrere, z.B. acht, Scanning-Delta-Lasersonden (60–75) vorgesehen sind, die nach einem Triangulationsverfahren pro Sonde ein zweidimensionales Meßergebnis liefern, welches über eine Anpaß-Elektronik linearisiert (80) und als Dezimale dem übergeordneten Rechner (95) der betreffenden Station eingegeben wird.

5. Einrichtung zum Durchführen des Meß- und Anordnungsverfahrens zum Anordnen und Befestigen von Anbauteilen an Kraftfahrzeug-Karosserien nach Anspruch 1 oder einem der folgenden Patentansprüche, bei dem an der arretierten und gespannten Karosserie 3D-Meßtaster (25, 26, 27) die Lage der Seitenwandausschnitte (29, 30, 31, 32) für die hier vorgesehenen Türen (106, 107) und Ausschnitte mit entsprechenden Kontaktstellen der Anbauteile sowie die Anschraubflächen für Seitenwände mittels Laser-Sonden (60–75) ermitteln und diese Meßergebnisse an einen Rechner (80) weitergeleitet werden, wo sie mit den gespeicherten Daten durch einen Rechner verglichen werden und der Rechner während der Bewegungszeit des Handlings-Roboters (126, 127) die Lage der Anschlußpunkte (35–48) der Anbauteile (33, 34) errechnet und an die Steuerung eines Handlings-Roboters übermittelt und der betreffende Handlings-Roboter (78, 79) mit den so korrigierten Werten für die Anschlußpunkte (35–53) des betreffenden Anschlußteils (33, 34) in seine Einbaulage bringt, heranfördert und anschließen befestigt, wobei alle Anbauteile (33, 34) im freien Raum unabhängig voneinander automatisch maschinell an der Karosserie (1) spalt- und charakterliniengenau positioniert und befestigt werden, dadurch gekennzeichnet, daß

a) eine mit einem Rechner (80) ausgerüsteten Meßstation (A) vorgesehen ist, in welcher die Karosserie (1) durch Spannelemente fixierbar und die Koordinaten von Anschlußpunkten (35–53) für die Anschlußteile durch 2D-Scanning-Sonden (60–75) bestimmbar und in dem Rechner (80) speicherbar und die dazugehörige Lage der KFZ-Karosserie (1) in dieser Lage – im Raum – durch vorzugsweise drei gegen den Bodenbereich in Berührungskontakt bringbare, gegeneinander in der Ebene versetzte Meßtaster (25, 26, 27) bestimmbar und deren Werte ebenfalls in dem Rechner (80) speicherbar sind und

b) daß mindestens eine, vorzugsweise mehrere Stationen (I–V) angeschlossen sind, zu welcher die zuvor vermessene Karosserie (1) durch ein Fördermittel bringbar und hier ihre Lage im Raum durch wenigstens drei in der Ebene gegeneinander versetzte Meßtaster abermals bestimmbar ist und diese Werte in einem Rechner (95) eingebbar und mit den in der Meßstation (A) gemessenen und gespeicherten Werten vergleichbar sind und

c) durch Handlings-Roboter (78, 79) die jeweiligen Anschlußteile (90, 91) anhand von Vergleichswerten aus der Meßstation (A) und der in der jeweiligen Station (I) konkret bestimmten Meßdaten geteuert das Anschlußteil (90, 91) koordinatengenau in seine Lage bringen und

d) etwaige Korrekturen durch mindestens eine 2D-Scanning-Sonde in Form von Steuerbefehlen an den Handlings-Roboter (78, 79) ausgleichbar sind, woraufhin

e) durch Schweißroboter (100–103) oder Anschraubroboter (154, 135) das betreffende Anschlußteil (90, 91 oder 120, 121) an der Karosserie (1) befestigbar ist und daß

f) zum Anordnen der Seitentüren (90, 91, 106, 107) auf jeder Seite eines Taktförderes je mindestens ein Handlungs-Roboter (78, 79, 85, 86), der insbesondere als Sechsachsiger-Handlings-Roboter ausgebildet ist, angeordnet ist.

6. Verfahren nach Anspruch 4 oder einem oder mehreren der folgenden Ansprüche, **dadurch gekennzeichnet**, daß an jeder Seite der Karosserie (1) mehrere, z.B. acht, Scanning-Delta-Lasersonden (60 - 75) vorgesehen sind, die nach einem Triangulationsverfahren pro Sonde eine zwei-dimensionales Meßergebnis liefern, welches über eine Anpaß-Elektronik die Ergebnisse linearisiert (80) und als Dezimale dem übergeordneten Rechner (95) der betreffenden Station eingegeben werden.

7. Einrichtung zum Durchführen des Verfahrens nach Anspruch 1 oder einem oder mehreren der folgenden Ansprüche zum Anordnen von Anbauteilen (Seitentüren, Heck-und Frontklappen, Kotflügeln (90 - 121) ) an Kraftfahrzeugkarosserien (1), **dadurch gekennzeichnet**, daß

8. Einrichtung nach Anspruch 7, **dadurch gekennzeichnet**, daß die Anschlußteile (90 - 121) außerhalb des Aufstellraumes der Handlings-Roboter seitlich neben dem Linearförderer durch je einen Taktförderer heranförderbar sind, aus denen die Handlings-Roboter (78, 79) das jeweils benötigte Anschlußteil (90, 91) entnehmen und koordinatengesteuert in die genaue Einbaulage bringen, woraufhin dann die Befestigung erfolgt.

9. Einrichtung nach Anspruch 7, und/oder 8, **dadurch gekennzeichnet**, daß beiderseits der Karosserie (1) - oben und unten - je mindestens ein Schweißroboter (100 - 103) angeordnet ist, denen jeweils mindestens ein Laser-Nahtsuchsystem zugeordnet ist, das die Lage, d. h. wie der betreffende Schweißroboter zu führen ist, ermittelt.

10. Einrichtung nach Anspruch 7 oder einem der folgenden, **dadurch gekennzeichnet**, daß jeder Handlings-Roboter mit einer Greifeinheit (87, 112, 130, 131, 137) versehen ist, mit dem das Anschlußteil, z.B. eine Tür vorne links/rechts oder hinten links/rechts oder Heckklappe, oder Frontklappe, oder Seitenwand links/rechts aufnehmbar und paßgenau in Einbaulage transportierbar und haltbar ist.

11. Einrichtung nach Anspruch 7 oder einem der folgenden, **dadurch gekennzeichnet**, daß zum Anordnen der Seitentüren je mindestens zwei in vertikaler Richtung in unterschiedlichen Ebenen übereinander angeordnete 2D-Scanning-Delta-Lasersonden vorgesehen sind, die den strackgenauen Anschluß der Türen kontrollieren und den betreffenden Handlings-Roboter korrigieren.

12. Einrichtung nach Anspruch 7 oder einem der folgenden, **dadurch gekennzeichnet**, daß zum Anschluß der Heck-oder Frontklappe (109, 110) auf jeder Seite mindestens eine 2D-Scanning-Delta-Lasersonde (114 - 117 oder 141 - 144) vorgesehen ist, die den Anschluß der Heck- bzw. Frontklappe (109, 110) strackgenau kontrollieren und den betreffenden Handlings-Roboter (113 bzw. 139) korrigeren.

13. Einrichtung nach Anspruch 7 oder einem der folgenden, **dadurch gekennzeichnet**, daß mindestens nach dem Anordnen der Seitentüren vorn (106, 107) eine Kontrollstation (III) vorgesehen ist, bar sind und die Überwachung von der einzigen Kontrollstation erfolgt.

14. Einrichtung nach Anspruch 5 oder einem der folgenden, dadurch gekennzeichnet, daß die Seitenwände (120, 121) mit Blechschrauben über elektronisch gesteuerte Schraubeinheiten zu befestigen sind und daß die Schraubeinheit (134, 135) frei programmierbar ausgebildet ist.

**Revendications**

1. Procédé de mesure et de mise en place suivant plan d'assemblage dans le but de procéder à la disposition et à la fixation des pièces à rapporter sur les carroseries (1) de véhicules automobiles, procédé suivant lequel, sur une carrosserie (1) immobilisée par mécanisme de blocage et fixée par dispositif de serrage, des palpeurs mesureurs 3-D (25, 26, 27), au moyen de sondes à laser (60–75), déterminent la position des surfaces (29, 30, 31, 32) découpées sur les côtés latéraux pour les portes (106, 107) prévues en ces endroits et définissent la position d'autres surfaces découpées, en précisant les points de contact correspondants des pièces à rapporter, ainsi que les surfaces d'application des fixations par vis pour les panneaux latéraux, et les résultats de ces mesures sont transmis à un ordinateur (80), où ils sont comparés par un ordinateur (95) avec les données déjà mises en mémoire, et l'ordinateur (95) détermine par le calcul, pendant le temps où un robot industriel (126, 127) est en mouvement, la position des points d'attache (35–48) des pièces à rapporter (33, 34) et retransmet au système de commande du robot industriel (78, 79), et le robot industriel (78, 79) concerné, compte tenu de la prise en compte des valeurs ainsi rectifiées pour les points d'attache (35–53) de la pièce d'assemblage (33, 34) concernée, apporte, amène au contact et fixe ensuite cette dernière dans sa position de montage, opérations au cours desquelles toutes les pièces à rapporter (33, 34) sont, en espace libre, positionnées et fixées à la carrosserie (1), indépendamment les unes des autres, par mécanismes automatiques suivant une façon précise conforme au tracé des lignes de fentes et au tracé des lignes caractéristiques, procédé caractérisé par le fait que la carrosserie (1) est transportée d'abord dans une station de mesure (A) particulière et est ensuite, dans le but de permettre la mise en place des pièces à rapporter (90, 91, 106, 107, 109, 110, 120, 121), transportée hors de la station (A) et transférée au moins à une autre station (I), avec pour caractéristiques que dans cette station la position de la carrosserie (1) est à nouveau déterminée dans l'espace et qu'ensuite les robots industriels (78, 79) amènent les pièces à rapporter dans la position de montage, en étant commandés par ordinateurs, la position résultante de la carrosserie dans cette station ayant été prise en compte.

2. Procédé conformément à revendication 1, caractérisé par le fait que pendant ou après le processus de travail des ordinateurs, au cours duquel les coordonnées (35–53) relatives à la carrosserie (1) sont comparées dans l'espace après la station de mesure (A) avec les coordonnées (35–53) déterminées auparavant dans la station de mesure (A), des sondes à laser Scanning-Delta (96–99; 122–124; 141–144), entre autres, palpent la position des pièces à rapporter (90–121) concernées, en particulier la largeur des fentes et/ou les points d'attache, et avec pour caractéristique que ces valeurs mesurées sont également retransmises pour la commande des robots industriels (78, 79, 85, 86, 113, 126, 127, 139) à ces derniers dans le but de rectifier la position de la pièce conernée à rapporter (90–121).

3. Procédé conformément à revendication 1 ou 2, caractérisé par le fait qu'un système à laser de détection des emplacements de joints de soudage détermine la position répondant aux conditions suivant lesquelles doit être conduit le robot de soudage et ensuite applique pour soudage les robots de soudage (100–103, 118, 119, 149) pour la fixation à la carrosserie (1) de pièces à rapporter (90, 91, 106, 107, 109, 110) ou de pièces de fixation (attaches de fixation ou pièces de même nature) s'adaptant à ces dernières.

4. Procédé conformément à revendication 2 ou 3, caractérisé par le fait que sur chaque côté de la carrosserie (1) sont prévues plusieurs, par exemple huit, sondes à laser Scanning-Delta (60–75) qui fournissent, suivant un procédé de triangulation appliqué par chaque sonde, un résultat de mesure en deux dimensions qui est linéarisé au moyen d'un système adaptateur électronique (80) et est introduit en tant que décimale dans l'ordinateur (95) de rang supérieur à ce dernier et faisant partie de la station concernée.

5. Installation pour exécution d'opérations relatives à un procédé de mesure et de mise en place suivant plan d'assemblage dans le but de procéder à la disposition et à la fixation des pièces à rapporter sur les carrosseries de véhicules automobiles suivant revendication 1 ou conformément à l'une des revendications suivantes du brevet, installation où, sur une carrosserie immobilisé par mécanisme de blocage et fixée par dispositif de serrage, des palpeurs mesureurs 3D (25, 26, 27), au moyen de sondes à laser (60–75), déterminent la position des surfaces (29, 30, 31, 32) découpées sur les côtés latéraux pour les portes (106, 107) prévues en ces endroits et définissent la position d'autres surfaces découpées, en précisant les points de contact correspondants des pièces à rapporter, ainsi que les surfaces d'application des fixations par vis pour les panneaux latéraux, et les résultats de ces mesures sont transmis à un ordinateur (80), où ils sont comparés par un ordinateur avec les données déjà mises en mémoire, et l'ordinateur déterime par le calcul, pendant le temps où le robot industriel (126, 127) est en mouvement, la position des points d'attache (35–48) des pièces à rapporter (33, 34) et la retransmet au système de commande d'un robot industriel, et le robot industriel (78, 79) concerné, compte tenu de la prise en comtpe des valerus ainsi rectifiées pour les points d'attache (35, 53) de la pièce d'assemblage (33, 34) concernée, apporte, amène au contact et fixe ensuite cette dernière dans sa position de montage, opérations au cours desquelles toutes les pièces à rapporter (33, 34) sont, en espace libre, positionnées et fixées à la carrosserie (1), indépendamment les unes des autres, par mécanismes automatiques suivant une façon précise conforme au tracé des lignes de fentes et au tracé des lignes caractéristiques, installation caractérisée par les faits que:

   a) une station de mesure (A) est prévue, équipée d'un ordinateur (80), dans laquelle la carrosserie (1) peut être fixée par les éléments d'un dispositif de serrage, et les coordonnées des points d'attache (35–53) pour les pièces d'assemblage peuvent être déterminées par les sondes 2D-Scanning (60–75) et être mises en mémoire dans l'ordinateur (80) et la position correspondante de la carrosserie (1) du véhicule automobile dans cette position – dans l'espace – peut être déterminée de façon préférentielle au moyen de trois palpeurs mesureurs (25, 26, 27) que l'on peut amener en contact contre la zone du plancher de carrosserie, qui ont été mis en place en convergence sur le plan défini et dont les valeurs peuvent être également mises en mémoire dans l'ordinateur (80),

b) une station au moins est raccordée, de préférence plusieurs stations (I–V) sont raccordées, où la carrosserie (1) auparavant mesurée peut être amenée par dispositif à transfert et où sa position dans l'espace peut être déterminée de nouveau par au moins trois palpeurs mesureurs qui ont été mis en place en convergence sur leplan défini, et ces valeurs peuvent être introduites dans un ordinateur (95) et être comparées avec les valeurs mesurées et mises en mémoire ans la station de mesure (A), et

c) au moyen de robots industriels (78, 79), commandés par ordinateurs suivant valeurs de comparaison fournies par la station de mesure (A) et suivant données de mesure déterminées concrètement dans la station (I) respective, les pièces d'assemblage (90, 91) respectives sont apportées et la pièce d'assemblage (90, 91) est amenée, conformément aux commandes de l'ordinateur, dans sa position correspondant exactement aux coordonnées, et

d) des rectifications éventuelles peuvent être compensées au moins par une sonde 2D-Scanning sous le forme d'instructions de contrôle données aux robots industriels (78, 79), et ensuite

e) la pièce d'assemblage concernée (90, 91 ou 120, 121) peut être fixée à la carrosserie (1) au moyen de robots de soudage (100–103) ou de robots de vissage (134, 135), et avec pour caractéristique que:

f) pour la mise en place des portes latérales (90, 91, 106, 107) est disposé sur chaque côté d'un convoyeur, à déplacement réglé suivant une cadence définie, respectivement au moins un robot industriel (78, 79, 85, 86) qui a été en particulier conçu en tant que robot industriel à six axes.

6. Installation conformément à revendication 5, caractérisée par le fait que les pièces d'assemblage (90–121) peuvent être amenées à l'extérieur de la zone d'implantation des robots industriels, latéralement à côté du convoyeur linéaire, au moyen d'un convoyeur respectivement affecté, à déplacement réglé suivant une cadence définie, à partir desquels les robots industriels (78, 79) prélèvent la pièce d'assemblage (90, 91) respectivement nécessitée et l'amènent dans la position de montage exacte conformément aux commandes des ordinateurs opérent suivant référence aux coordonnées, opération après laquelle a lieu la fixation.

7. Installation conformément à revendication 5 et/ou 6, caractérisée par le fait que des deux côtés de la carrosserie (1) – en haut et en bas – est disposé respectivement au moins un robot de soudage (100–103), auxquels est respectivement affecté au moins un système à laser de détection des emplacements des joints de soudage, qiu détermine la position, c'est à dire qu'est ainsi établie la façon dont les robots de soudage concernés seront dirigés.

8. Installation conformément à revendication 5 ou à l'une des suivantes, caractérisé par le fait que chaque robot industriel est pourvu d'une main (87, 112, 130, 137), au moyen de laquelle la pièce d'assemblage, par exemple une porte avant gauche/droite ou arrière gauche/droite ou un couvercle rabattant arrière ou un couvercle rabattant avant ou un panneau latéral gauche/droite, peut être saisie et transportée dans la position de montage suivant une précision exactement ajustée aux formes et être tenue en cette position.

9. Installation conformément à revendication 5 ou à l'une des suivantes, caractérisée par le fait que pour la mise en place des portes latérales sont respectivement prévues au moins deux sondes à laser 2D-Scanning-Delta disposées verticalement l'une au dessus de l'autre sur des plans différents, qui contrôlent l'ajustement rigoureux du raccordement des portes et rectifient la façon d'intervenir des robots industriels concernés.

10. Installation conformément à revendication 5 ou l'une des suivantes, caractérisée par le fait que pour le raccordement du couvercle rabattant arrière ou du couvercle rabattant avant (109, 110) est prévue sur chaque côté au moins une sonde à laser 2D-Scanning-Delta (114–117 ou 141–144), qui contrôlent avec une précision rigoureuse le raccordement du couvercle rabattant arrière ou du couvercle rabattant avant (109, 110) et rectifient l'intervention des robots industriels concernés (113 ou 139).

11. Installlation conformément à revendication 5 ou l'une des suivantes, caractérisée par les faits qu'au moins après la mise en place des portes latérales avant (106, 107) a été prévue une station de contrôle (III), au moyen de laquelle la mise en place des portes latérales (90, 91, 106, 107) peut être contrôlée par des moniteurs et des caméras de télévision et que l'installation peut être mise le cas échéant en position d'arrêt.

12. Installation conformément à revendication 5 ou l'une des suivantes, caractérisée par le fait que les sondes à laser Scanning-Delta (60–75) sont mues par système pneumatique et sont conçues en particulier pour pouvoir pivoter.

13. Installation conformément à revendication 5 ou l'une des suivantes, caractérisée par le fait que les cordons de soudure du couvercle rabattant arrière et du couvercle rabattant avant (109, 110) peuvent aussi être contrôlés au moyen au moins de quatre appareils photo-vidéo (145–148), et avec pour caractéristiques que les cordons de soudure du couvercle rabattant avant (110) peuvent être rapportés à une mémoire image et que la surveillance est effectuée par la station de contrôle unique.

14. Installation conformément à revendication 5 ou l'une des suivantes, caractérisée par le fait que les panneaux latéraux (120, 121) doivent être fixés avec des vis à tôle au moyen d'unités d'assemblage par vis commandées par système électronique, et avec pour caractéristique que l'unité d'assemblage par vis (134, 135) est conçue pour être librement programmée.

**Claims**

1. Method for measuring and laying-out, used for arranging and fastening add-on parts to automotive car bodies (1), according to which, 3-D-measuring sensors (25, 26, 27), at the car body locked and tightened, are detecting the positions of said side panel cutouts (29, 30, 31, 32) for the doors (106, 107) her provided and of other cutouts with appropriate contact positions of said add-on parts, as well as are determining the screwed-on surfaces for said side panels by means of laser probes (60–75) and will transmit these measuring results to a computer (80), where they are being compared with the data stored by a computer (95) and said computer (95), during the motional time of said handling-robot (126, 127), is calculating the position of said connecting terminals (35–48) of said add-on parts (33, 34) and is transmitting it to the control system of said handling-robot (78, 79), and said respective handling-robot (78, 79) together with said data so corrected for said connecting terminals (35–53) is moving said add-on part (33, 34) in question into its fiting position, then advancing and subsequently fastening it, whereby all said add-on parts (33, 34), in the free space and independently of each other, are being positioned and fastened to said car body (1) in an automatic mechanized manner and exactly in accordance with splittings and character contours, characterized in that said car body (1) for the time being is transported into a special measuring station (A) and subsequently, for the purpose of arranging said add-on parts (90, 91, 106, 107, 109, 110, 120, 121), is being removed from said measuring station (A) and is advanced at least into a further station (I), and that in this station said position of said car body (1) in said space is again determined, and then said handling-robots (78, 79) will bring said add-on parts, computer-controled, into said add-on position by taking into account said position of said car body (1), given in this station.

2. Method according to claim 1, characterized in that during or after said computer process at which said coordinates (35–53) of said car body (1), in the space behind said measuring station (A), are being compared with said coordinates (35–53) previously determined in said measuring station (A), scanning-delta-laser probes and others (96–99; 122–124; 141–144) are scanning said position of said respective add-on part (90–121), especially the splitting width and/or the connecting terminals, and that these measuring values are also being transmitted to these to control said handling-robots (78, 79, 85, 86, 113, 126, 127, 139) for the purpose of correcting the position of said add-on parts (90–121) concerned.

3. Method according to claim 1 or 2, characterized in that a laser system for searching joints is detecting said position as to how said welding robot shall be conducted, and thereupon welding robots (100–103, 118, 119, 149) for the purpose of fastening said connection parts (90, 91, 106, 107, 109, 110) or of fastening means (brackets etc.) coordinated to them are welding said parts to said car body (1).

4. Method according to claim 2 or 3, characterized in that on each side of said car body (1) several, e.g. eight, scanning-delta-laser probes (60–75) are provided, which will supply, according to a triangulation mode, for each probe a two-dimensional measuring result which, via an adaptive electronics (80), is being linearized and fed as a decimal into said overriding computer (95) of said station concerned.

5. Device for execution of said method for measuring and laying-out, used for arranging and fastening add-on parts to automotive car bodies (1) according to claim 1 or to one of the following patent claims, according to which, 3-D-measuring sensors (25, 26, 27), at the car body locked and thightened, are detecting the positions of the side panel cutouts (29, 30, 31, 32), for the doors (106, 107) here provided and of other cutouts with appropriate contact positions of said add-on parts, as well as are determining the screwed-on surfaces for said side panels by means of laser probes (60–75), and will transmit these measuring results to a computer (80), where they are being compared with the data stored by a computer (95) and said computer (95), during the motional time of said handling-robot (126, 127) is calculating the position of said connecting terminals (35–48) of said add-on parts (33, 34) and is transmitting it to the control system of said handling-robot (78, 79), and said respective handling-robot (78, 79) together with said data so corrected for said connecting terminals (35–53) of said connecting part (33, 34) in question is moving said add-on part (33, 34) in question into its fitting position, then advancing and subsequently fastening it, whereby all said add-on parts (33, 34), in the free space and independently of each other, are being positioned and fastened to said car body (1) in an automatic mechanized manner and exactly in accordance with splittings and character contours, characterized in that

a) a measuring station (A) equipped with a computer (80) is provided, in which said car body (1) can be fixed by clamping elements and that said coordinates of said connecting terminals (35–53) for said connecting parts can be determined by 2-D-scanning probes (60–75) and can be fed into said computer (80) and that said pertaining position of said automative car body (1) in this position – in said space – can preferably be determined by three measuring sensors (25, 26, 27) being displaced against each other in a plane and can be brought in contact against said bottom area, and that the values of which can also be stored in said computer (80) and

b) that at least one, preferably several stations (I–V) are connected, to which said car body (1) previously measured can be brought by a conveying means, and here its position in said space can again be determined by at least three in said plane displaced measuring sensors, and that these values can be fed into a computer (95) and are comparable with said values measured and stored in said measuring station (A) and

c) by handling-robots (78, 79), said particular connecting parts (90, 91) will controllable bring, by means of comparative values from said measuring station (A) and of the measuring data tangibly determined in said respective station (I), said connecting part (90, 91) into its position being exactly in accordance with its coordinates and

d) possible corrections are compensatory in form of control commands by at least one 2-D-scanning sensor, whereupon

e) by welding robots (100, 108) or screwed-on robots (134, 135), said respective connecting part (90, 91 or 120, 121) can be fastened to said car body (1) and that

f) for arranging said side-doors (90, 91, 106, 107) on each side of a clock-actuated conveyor is provided at least each one handling-robot (78, 79, 85, 86) which is especially developed as a handling-robot equipped with six axles.

6. Device according to claim 5, characterized in that said connecting parts (90–121) can be advanced each by clock-actuated conveyors from outside of the installation place of said handling-robot and at the side next to said linear conveyor, form which the handling-robots (78, 79) will take out said connecting part (90, 91) required at any given time and will bring it, controlled in accordance with said coordinates, into said exact installation position, whereupon said fastening will take place.

7. Device according to claim 5 and/or claim 6, characterized in that on both sides of said car body (1) – above and below – at least each a welding robot (100–103) is arranged, to which at least at a time is provided a laser searching system for joints, detecting the position i.e. on how said welding robot concerned is to be guided.

8. Device according to claim 5 or one of the following claims, characterized in that every handling robot is provided with a gripping unit (87, 112, 130, 131, 137), by which said connecting part, e.g. a door in the front to the left/right or behind to the left/right or a rear flap or a front flap or a side panel to the left/right, can be lifted up and transported and held exactly fitting said installation position.

9. Device according to claim 5 or one of the following claims, characterized in that for arranging said side-doors, at a time at least two stacked 2-D-scanning-delta-laser probes are provided as well as in vertical direction and in different planes, by which the exact fitting for said connection of said doors is being controlled and said handling-robot concerned is being corrected.

10. Device according to claim 5 or one of the following claims, characterized in that for connection of said rear or front flap (109, 110) at least on every side is provided a 2-D-scanning-delta-laser probe (114–117 or 141–144) controlling exactly fitting said connection of said rear flap and front flap respectively and correcting said handling-robot (113 and 139 resp.).

11. Device according to claim 5 or one of the following claims, characterized in that at least after arranging said side-doors, in said front is provided a control station (III) by which, via monitors and video cameras, the arrangement of said side-doors (90, 91, 106, 107) can be controled, and said device can be blocked up if necessary.

12. Device according to claim 5 or one of the following claims, characterized in that said scanning-delta-laser probes (60–75) are developed for automatic, especially for swivelling movements.

13. Device according to claim 5 or one of the following claims, characterized in that also the welding joints of said rear and front flaps (109, 11) are controlled via at least four video cameras (145–148), and that said welding joints of said front flap (110) can be transmitted to a screen and that the monitoring can be made from said single control station.

14. Device according to claim 5 or one of the following claims, characterized in that said side panel (120, 121) are to be fixed by sheet metal screws via electronically controlled screwing units and that said screwing unit (134, 135) is developed for free programming.

Fig.1

1/17

Fig.2

Fig.3

Fig.4

EP 0 261 297 B1

Fig.5

# Fig.6

EP 0 261 297 B1

Fig.7

Fig. 8

# Fig.9

85 (86)

EP 0 261 297 B1

Fig.10

107  1  106

86  Z  85

EP 0 261 297 B1

Fig. 11

Fig.12

118(119)    1    134(135)

113    111    127(126)

C

EP 0 261 297 B1

# Fig.13

118 109 112 119

113 114 115 116 (117)

EP 0 261 297 B1

Fig.14

EP 0 261 297 B1

Fig.15

146

149

110

141

145 144 143

137 138

C

V

148

142 139

140

147

EP 0 261 297 B1

Fig.16

Fig.17

EP 0 261 297 B1